# EUROPEAN PATENT APPLICATION

(11) **EP 4 804 151 A1**
(43) Date of publication of application: **09.09.2026**
(21) Application number: 25219479.0
(22) Date of filing: 28.11.2025
(51) Int. Cl.: G06V 30/412, G06V 30/422, G06V 30/148, G06V 10/25, G06V 10/764, G06V 10/82

(54) **METHOD AND SYSTEM FOR GENERATING EDITABLE SCHEMATIC ILLUSTRATION OF NON-EDITABLE SCHEMATIC ILLUSTRATION**

(30) Priority: 04.03.2025 IN 202541019135
(71) Applicant: L & T Technology Services Limited, Chennai, Tamil Nadu 600089 (IN)
(72) Inventor: MURTHY, Pavan Narasimha, 570019 Mysuru (IN); KUMAR, Pragyesh, 282010 Agra (IN); RAWAL, Jailesh, 390008 Vadodara (IN); KHANDELWAL, Manish Satischand, 390006 Vadodara (IN); KUMAR, Sajit, 560038 Bangalore (IN); BHATTI, Disha, 361120 Jamnagar (IN)
(74) Representative: Studio Torta S.p.A.

(57) **Abstract**

A method (2100) and a system (100) for generating editable schematic illustration of non-editable schematic illustration (300) is disclosed. A processor (104) detects a set of text-ROls (502) corresponding to text data. A set of object-ROls are detected corresponding to a plurality of object-entities. Text metadata is determined from the set of text-ROls (502). Entity metadata is determined from the set of object-ROls. Entity classification information is determined by classifying one or more of the set of object-ROls. Association information is determined between each of the set of text-ROls (502) and at least one of the set of object-ROls. A set of lines are determined. The editable schematic illustration is generated based on the text metadata, the entity metadata, the association information, and the set of lines in an editable format. (FIG. 1)

## Description

### Technical field

This disclosure relates generally to the field of converting non-editable files into editable files, and more specifically to a method and system for generating editable schematic illustration of a non-editable schematic illustration.

### BACKGROUND

Schematic illustrations such as Piping and Instrumentation Diagrams (P&ID) are widely used in diverse sectors like manufacturing, chemical processing, and construction to represent complex Piping and Instrument (P&I) Systems which involve pipelines, instrumentation, and control action systems. Such schematic illustrations are an extreme reference point for design, operation, maintenance, and troubleshooting tasks in an industry. Conventionally, these schematic illustrations have been kept in non-editable formats like scanned images or PDFs, which renders them not usable for modern digital workflow. Converting those illustrations into editable formats greatly enhances their access, interoperability, and usability for automation and further analysis in engineering workflows.

However, converting non-editable diagrams into editable formats can be really challenging. Conventional methods work with dealing with different forms of data, that was done manually by entering data and interpreting visually. It is a time-consuming process and prone to errors. The presence of different entities, orientation of texts, and graphical elements in the P&I systems, further constrains these conventional methods.

Therefore, there is a need for a methodology of generating editable schematic illustration of non-editable schematic illustration.

### SUMMARY OF THE INVENTION

In an embodiment, a method of generating an editable schematic illustration of a non-editable schematic illustration is disclosed. The method may include detecting, by a processor, a set of text-region of interests (text-ROls) corresponding to text data in the non-editable schematic illustration using an Optical Character Recognition (OCR) technique. The method may further include detecting, by the processor, a set of object-region of interests (object-ROIs) corresponding to a plurality of object-entities in the non-editable schematic illustration using an object detection technique. The method may further include determining, by the processor, text metadata from the set of text-ROIs using the OCR technique. In an embodiment, the text metadata may include text information, text orientation information and text location information associated to each of the set of text-ROls. The method may further include determining, by the processor, entity metadata from the set of object-ROls using the object detection technique. In an embodiment, the entity metadata may include object orientation information, class label information, and object location information associated to each of the set of object-ROIs. The method may further include determining, by the processor, entity classification information by classifying one or more of the set of object-ROls as one of a plurality of predefined child-classes based on the class label information of a corresponding object-ROI using a Deep Learning (DL) model. The method may further include determining, by the processor, association information between each of the set of text-ROIs and at least one of the set of object-ROIs by calculating an association index based on the text metadata and the entity metadata and the entity classification information. The method may further include determining, by the processor, a set of lines based on determination of a skeletonized image of the non-editable schematic illustration, using an image processing technique. In an embodiment, the set of lines may be determined based on a determination of a set of vertical lines, a set of horizontal lines, and a set of angular lines. The method may further include generating, by the processor, the editable schematic illustration based on the text metadata, the entity metadata, the association information, and the set of lines in an editable file format.

In another embodiment, a system for generating an editable schematic illustration of a non-editable schematic illustration is disclosed. The system may include a processor, and a memory communicably coupled to the processor, wherein the memory stores processor-executable instructions, which on execution, cause the processor to detect a set of text-region of interests (text-ROIs) corresponding to text data in the non-editable schematic illustration using an Optical Character Recognition (OCR) technique. The processor may further detect a set of object-region of interests (object-ROIs) corresponding to a plurality of object-entities in the non-editable schematic illustration using an object detection technique. The processor may further determine text metadata from the set of text-ROIs using the OCR technique. In an embodiment, the text metadata may include text information, text orientation information and text location information associated to each of the set of text-ROIs. The processor may further determine entity metadata from the set of object-ROIs using the object detection technique. In an embodiment, the entity metadata may include object orientation information, class label information, and object location information associated to each of the set of object-ROIs. The processor may further determine entity classification information by classifying one or more of the set of object-ROIs as one of a plurality of predefined child-classes based on the class label information of a corresponding object-ROI using a Deep Learning (DL) model. The processor may further determine association information between each of the set of text-ROIs and at least one of the set of object-ROIs by calculating an association index based on the text metadata and the entity metadata and the entity classification information. The processor may further determine a set of lines based on determination of a skeletonized image of the non-editable schematic illustration, using an image processing technique. In an embodiment, the set of lines may be determined based on a determination of a set of vertical lines, a set of horizontal lines, and a set of angular lines. The processor may further generate the editable schematic illustration based on the text metadata, the entity metadata, the association information, and the set of lines in an editable file format.

It is to be understood that both the foregoing general description and the following detailed description are exemplary and explanatory only and are not restrictive of the invention, as claimed.

### BRIEF DESCRIPTION OF THE DRAWING

The accompanying drawings, which are incorporated in and constitute a part of this disclosure, illustrate exemplary embodiments and, together with the description, serve to explain the disclosed principles.
**FIG. 1** is a block diagram of an exemplary system for generating an editable schematic illustration of a non-editable schematic illustration, in accordance with an embodiment of the present disclosure.
**FIG. 2** is a functional block diagram of the computing device of the system of **FIG. 1**, in accordance with an embodiment of the present disclosure.
**FIG. 3** illustrates a non-editable schematic illustration, in accordance with an embodiment of the present disclosure.
**FIG. 4** depicts cropping of the non-editable schematic illustration of **FIG. 3**, in accordance with an embodiment of the present disclosure.
**FIG. 5** depicts detection of a set of text-region of interests (text-ROls), in accordance with an embodiment of the present disclosure.
**FIG. 6** depicts determination of line-list metadata from the set of text-ROIs of **FIG. 5**, in accordance with an embodiment of the present disclosure.
**FIG. 7** illustrates a table depicting a plurality of predefined sub-classes of a line, in accordance with an embodiment of the present disclosure.
**FIG. 8** illustrates a table depicting a plurality of predefined sub-classes of an equipment, in accordance with an embodiment of the present disclosure.
**FIG. 9** illustrates a table depicting a plurality of predefined sub-classes of an instrument, in accordance with an embodiment of the present disclosure.
**FIG. 10** illustrates a table depicting a plurality of predefined sub-classes of a valve, in accordance with an embodiment of the present disclosure.
**FIG. 11** illustrates a table depicting a plurality of predefined sub-classes of a fitting, in accordance with an embodiment of the present disclosure.
**FIG. 12** illustrates a table depicting a plurality of predefined sub-classes of a connector, in accordance with an embodiment of the present disclosure.
**FIG. 13** illustrates one or more portions of the non-editable schematic illustration of **FIG. 3**, in accordance with an embodiment of the present disclosure.
**FIG. 14** depicts classification of a set of object-ROIs sub-classified as an IN-OUT connector, in accordance with an embodiment of the present disclosure.
**FIG. 15** depicts the classified set of object-ROIs as the inlet connectors and the outlet connectors, in accordance with an embodiment of the present disclosure.
**FIG. 16** illustrates a table depicting association information between the set of text-ROls and the set of object-ROls classified as the equipment, in accordance with an embodiment of the present disclosure.
**FIG. 17** illustrates a table depicting association information between the set of text-ROls and the set of object-ROls classified as the instrument, in accordance with an embodiment of the present disclosure.
**FIG. 18** illustrates a table depicting association information between the set of text-ROls and the set of object-ROls classified as the valve, in accordance with an embodiment of the present disclosure.
**FIG. 19** illustrates a table depicting association information between the set of text-ROIs and the set of object-ROls classified as the fitting, in accordance with an embodiment of the present disclosure.
**FIG. 20** illustrates a table depicting association information between the set of text-ROls and the set of object-ROls classified as the connector, in accordance with an embodiment of the present disclosure.
**FIG. 21A** **and** **FIG. 21B** is a flow diagram of a methodology of generating an editable schematic illustration of a non-editable schematic illustration, in accordance with an embodiment of the present disclosure.
**FIG. 22** is a flow diagram of a methodology of pre-processing the non-editable schematic illustration, in accordance with an embodiment of the present disclosure.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered exemplary only, with the true scope being indicated by the following claims. Additional illustrative embodiments are listed.

Further, the phrases "in some embodiments", "in accordance with some embodiments", "in the embodiments shown", "in other embodiments", and the like mean a particular feature, structure, or characteristic following the phrase is included in at least one embodiment of the present disclosure and may be included in more than one embodiment. In addition, such phrases do not necessarily refer to the same embodiments or different embodiments. It is intended that the following detailed description be considered exemplary only, with the true scope being indicated by the following claims.

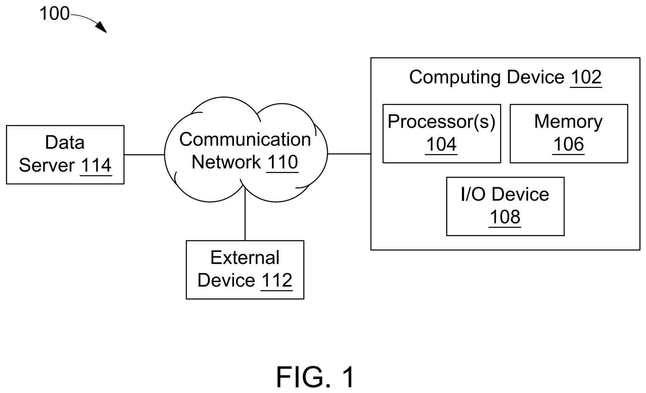

Referring now to **FIG. 1**, a block diagram of an exemplary system 100 for generating an editable schematic illustration of a non-editable schematic illustration, is illustrated, in accordance with an embodiment of the present disclosure. The system 100 may include a computing device 102, an external device 112, and a data server 114 communicably coupled to each other through a wired or wireless communication network 110. The computing device 102 may include a processor 104, a memory 106 and an input/output (I/O) device 108.

In an embodiment, examples of processor(s) 104 may include, but are not limited to, an Intel^{®} Itanium^{®} or Itanium 2 processor(s), or AMD^{®} Opteron^{®} or Athlon MP^{®} processor(s), Motorola^{®} lines of processors, Nvidia^{®}, FortiSOC^{™}, system on a chip processors or other future processors.

In an embodiment, the memory 106 may store instructions that, when executed by the processor 104, and cause the processor 104 to generate an editable schematic illustration of a non-editable schematic illustration, as will be discussed in greater detail herein below. In an embodiment, the memory 106 may be a non- volatile memory or a volatile memory. In an embodiment, the memory 106 may also store a single module or a combination of different modules to generate an editable schematic illustration of a non-editable schematic illustration. Examples of non-volatile memory may include but are not limited to, a flash memory, a Read Only Memory (ROM), a Programmable ROM (PROM), Erasable PROM (EPROM), and Electrically EPROM (EEPROM) memory. Further, examples of volatile memory may include but are not limited to, Dynamic Random Access Memory (DRAM), and Static Random-Access memory (SRAM).

In an embodiment, the I/O device 108 may comprise of variety of interface(s), for example, interfaces for data input and output devices, and the like. The I/O device 108 may facilitate inputting of instructions by a user communicating with the computing device 102. In an embodiment, the I/O device 108 may be wirelessly connected to the computing device 102 through wireless network interfaces such as Bluetooth^{®}, infrared, or any other wireless radio communication known in the art. In an embodiment, the I/O device 108 may be connected to a communication pathway for one or more components of the computing device 102 to facilitate the transmission of inputted instructions and output results of data generated by various components such as, but not limited to, processor(s) 104 and memory 106.

In an embodiment, the data server 114 may be enabled in a remote cloud server or a co-located server and may include a database (not shown) to store a non-editable schematic illustration, text metadata, entity metadata, association information, and any other data necessary for the system 100 to generate an editable schematic illustration of a non-editable schematic illustration. In an embodiment, the data server 114 may store data input by an external device 112 or output generated by the computing device 102. In an embodiment, the computing device 102 may be communicatively coupled with the data server 114 through the communication network 110.

In an embodiment, the communication network 110 may be a wired or a wireless network or a combination thereof. The communication network 110 can be implemented as one of the different types of networks, such as but not limited to, ethernet IP network, intranet, local area network (LAN), wide area network (WAN), or a Metropolitan Area Network (MAN). Various devices in the system 100 may be configured to connect to the communication network 110, in accordance with various wired and wireless communication protocols. Examples of such wired and wireless communication protocols may include, but are not limited to, a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols. Further the communication network 110 can include a variety of network devices, including routers, bridges, servers, computing devices, storage devices, and the like.

In an embodiment, the computing device 102 may receive a plurality of inputs from the external device 112 through the communication network 110. In an embodiment, the computing device 102 and the external device 112 may be a computing system, including but not limited to, a laptop computer, a desktop computer, a notebook, a workstation, a server, a portable computer, a handheld or a mobile device. In an embodiment, the computing device 102 may be, but not limited to, in-built into the external device 112 or may be a standalone computing device.

In an embodiment, the computing device 102 may perform various processing in order to generate an editable schematic illustration of a non-editable schematic illustration. By way of an example, the computing device 102 may receive a non-editable schematic illustration as an input. It should be noted that the input may be indicated or provided by a user via the I/O device 108. In an embodiment, the non-editable schematic illustration may correspond to a Piping and Instrument Diagram (P&ID). In an embodiment, the P&ID may be a schematic illustration of a Piping and Instrument system used in industries. In an embodiment, the non-editable schematic illustration may be provided in various formats, including but not limited to, image files (e.g., PNG, JPEG), or document formats (e.g., PDF).

The computing device 102 may pre-process the non-editable schematic illustration by extracting a set of contours using an inverse gray image of the non-editable schematic illustration. The computing device 102, in order to pre-process the non-editable schematic illustration, may further determine area information of each of the set of contours. The computing device 102, in order to pre-process the non-editable schematic illustration, may further crop one of the set of contours having an area greater than a predefined ratio of an area of the non-editable schematic illustration.

Further, the computing device 102 may slice the non-editable schematic illustration into a set of slices each of a predefined size. Thereafter, the computing device 102 may detect a set of text-region of interests (text-ROIs) corresponding to text data in the non-editable schematic illustration using an Optical Character Recognition (OCR) technique. In an embodiment, the set of text-ROIs may be detected based on detection of the text data in each of the set of slices. In an embodiment, examples of the OCR technique may include, but are not limited to, a template matching technique, a feature extraction technique, a pattern recognition technique, a deep learning-based OCR technique, a projection and segmentation technique, a lexicon-based OCR technique, and a morphological processing technique.

Thereafter, the computing device 102 may detect a set of object-region of interests (object-ROls) corresponding to a plurality of object-entities in the non-editable schematic illustration using an object detection technique. In an embodiment, the plurality of object-entities may include, but are not limited to, lines, instruments, valves, fittings, equipment, and connectors. In an embodiment, the lines may include, but are not limited to, O-sign lines, double slash lines, dotted lines, and flow arrows. In an embodiment, the instruments may include, but are not limited to, shared indicators, indicators, computer indicators, and programmable indicators. In an embodiment, the valves may include, but are not limited to, gate valves, check valves, glove valves, butterfly valves, needle valves, and three-way valves. In an embodiment, the fittings may include, but are not limited to, flanges, caps, reducers, hose connections, and spectacle blinds. In an embodiment, the equipment may include, but are not limited to, air coolers, water coolers, and tube and shell exchangers. In an embodiment, the connectors may include, but are not limited to, inlet-outlet (IN-OUT) connectors, rectangle connectors, utility connectors, and drain connectors.

In an embodiment, the set of object-ROIs may be detected based on detection of the plurality of object-entities in each of the set of slices. In an embodiment, examples of the object detection technique may include, but are not limited to, a cascade classifiers, a support vector machine, a template matching technique, a region-based convolutional neural network (R-CNN), you only look once (YOLO) technique, an EfficientDet technique, a RetinaNet technique, a vision transformers technique, and a CenterNet technique.

Further, the computing device 102 may determine text metadata from the set of text-ROIs using the OCR technique. In an embodiment, the text metadata may include text information, text orientation information and text location information associated to each of the set of text-ROIs. The text metadata may also include equipment-list metadata and line-list metadata. The computing device 102 may determine the equipment-list metadata by determining a set of equipment-list ROIs from the set of text-ROIs having the text orientation information equal to zero degrees from a predefined portion of the non-editable schematic illustration. In an embodiment, the equipment-list metadata may be determined as text data from the set of equipment-list ROIs. The computing device 102 may determine the line-list metadata based on detection of a predefined delimiter and a predefined symbol in the text metadata determined from the set of text-ROIs.

Further, the computing device 102 may determine entity metadata from the set of object-ROIs using the object detection technique. In an embodiment, the entity metadata may include object orientation information, class label information, and object location information associated to each of the set of object-ROls. The class label information of each of the set of object-ROIs may be determined based on a classification of each of the set of object-ROls as one of a plurality of predefined classes and as one of a plurality of predefined sub-classes of each of the plurality of predefined classes using the object detection technique. In an embodiment, the plurality of predefined classes may include, but are not limited to, a line, an instrument, a valve, a fitting, an equipment, and a connector. In an embodiment, the plurality of predefined sub-classes of the line may include, but are not limited to, an O-sign line, a double slash sign line, a dotted line, and a flow arrow. In an embodiment, the plurality of predefined sub-classes of the instrument may include, but are not limited to, a shared indicator, an indicator, a computer indicator, and a programmable indicator. In an embodiment, the plurality of predefined sub-classes of the valve may include, but are not limited to, a gate valve, a check valve, a glove valve, a butterfly valve, a needle valve, and a three-way valve. In an embodiment, the plurality of predefined sub-classes of the fitting may include, but are not limited to, a flange, a cap, a reducer, a hose connection, and a spectacle blind. In an embodiment, the plurality of predefined sub-classes of the connector may include, but are not limited to, an inlet-outlet (IN-OUT) connector, a rectangle connector, a utility connector, and a drain connector.

The computing device 102 may determine entity classification information by classifying one or more of the set of object-ROls as one of the plurality of predefined child-classes based on the class label information of a corresponding object-ROI using a Deep Learning (DL) model. In an embodiment, examples of the DL model may include, but are not limited to, a Recurrent Neural Network (RNN), a Bidirectional LSTM, a Convolutional Neural Network (CNN), a transformer-based model, a graph neural network, a sequence-to-sequence (Seqq2Seq) model, a multi-task learning model. The computing device 102, in order to determine the entity classification information of the set of object-ROls sub-classified as the flow arrow, may classify the one or more of the set of object-ROls sub-classified as the flow arrow as one of the plurality of predefined child-classes that may include a left flow arrow, an up flow arrow, a down flow arrow, a right flow arrow, an up-left flow arrow, an up-right flow arrow, a down-right flow arrow, and a down-left flow arrow. The computing device 102, in order to classify the one or more of the set of object-ROls sub-classified as the flow arrow, may determine a set of arrow-ROls from the set of object-ROIs sub-classified as the flow arrow. The computing device 102, in order to classify the one or more of the set of object-ROIs sub-classified as the flow arrow, may further determine a direction of each of the set of arrow-ROIs from a plurality of directions using a direction classification model.

The computing device 102, in order to determine the entity classification information of the set of object-ROIs sub-classified as the rectangle connector, may classify the one or more of the set of object-ROIs sub-classified as the rectangle connector as one of the plurality of predefined child-classes that may include an outlet connector and an inlet connector. The computing device 102, in order to classify the one or more of the set of object-ROls sub-classified as the rectangle connector, may classify the set of object-ROls sub-classified as the rectangle connector as one of the outlet connector or the inlet connector based on detection of a set of predefined keywords in the text metadata associated to the one or more of the set of object-ROls.

The computing device 102, in order to determine the entity classification information of the set of object-ROIs sub-classified as the IN-OUT connector, may classify the one or more of the set of object-ROls sub-classified as the IN-OUT connector as one of the plurality of predefined child-classes that may include an inlet connector and an outlet connector. The computing device 102, in order to classify the one or more of the set of object-ROIs sub-classified as the IN-OUT connector, may determine one or more portions of the non-editable schematic illustration. Each of the one or more portions may include one or more of the set of object-ROIs sub-classified as the IN-OUT connector using the object detection technique. The computing device 102, in order to classify the one or more of the set of object-ROIs sub-classified as the IN-OUT connector, may further determine a width of the one or more portions of the non-editable schematic illustration.

The computing device 102, in order to classify the one or more of the set of object-ROls sub-classified as the IN-OUT connector, may further determine a width of each of the set of object-ROIs sub-classified as the IN-OUT connector. The computing device 102, in order to classify the one or more of the set of object-ROIs sub-classified as the IN-OUT connector, may further determine a top-left x-coordinate of each of the set of object-ROIs sub-classified as the IN-OUT connector. The computing device 102, in order to classify the one or more of the set of object-ROIs sub-classified as the IN-OUT connector, may further detect a centre point from a plurality of edge points in each of the set of object-ROIs sub-classified as the IN-OUT connector. In an embodiment, one point from the plurality of edge points may be determined as the centre point in case the one point is at an acute angle with respect to a nearest point from the plurality of edge points. Accordingly, the computing device 102 may classify each of the set of object-ROls sub-classified as the IN-OUT connector as one of the outlet connector or the inlet connector. In an embodiment, an object-ROI from the set of object-ROIs sub-classified as the IN-OUT connector may be further classified as the inlet connector in case at least one of: a centre point of the object-ROI may be detected in a left of the object-ROI, else the set of object-ROIs sub-classified as the IN-OUT connector may be further classified as the outlet connector and the centre point of the object-ROI may be detected in a right half of the object-ROI and a summation of the top-left x-coordinate of the object-ROI and the width of the object-ROI may be greater than and equal to about the width of the corresponding portion of the non-editable schematic illustration, else the set of object-ROIs sub-classified as the IN-OUT connector may be further classified as the outlet connector.

Further, the computing device 102 may determine association information between each of the set of text-ROIs and at least one of the set of object-ROIs by calculating an association index based on the text metadata, the entity metadata, and the entity classification information. The association index may include an equipment association index, an instrument association index, a valve association index, a fitting association index, and a connector association index. The computing device 102, in order to calculate the equipment association index, may determine a set of equipment-text ROIs from the set of text-ROIs based on a matching between the equipment-list metadata and the class label information of each of the set of object-ROls. The computing device 102, in order to calculate the equipment association index, may further determine a minimum distance between each of the set of equipment-text ROIs and at least one of the set of object-ROIs classified as the equipment based on the corresponding text location information of each of the set of equipment-text ROIs and the corresponding object location information of each of the set of object-ROIs classified as the equipment.

The computing device 102, in order to calculate the instrument association index, may determine an intersection over union (IoU) between each of the set of text-ROIs with at least one of the set of object-ROIs classified as the instrument based on the corresponding text location information of the set of text-ROls and the object location information corresponding to each of the set of object-ROIs classified as the instrument.

The computing device 102, in order to calculate the valve association index, may determine an intersection over union (IoU) between each of the set of text-ROIs with at least one of the set of object-ROls classified as the valve based on the corresponding text location information of the set of text-ROIs and the object location information corresponding to each of the set of object-ROIs classified as the valve.

The computing device 102, in order to calculate the fitting association index, may determine an intersection over union (IoU) between each of the set of text-ROIs with at least one of the set of object-ROls classified as the fitting based on the corresponding text location information of the set of text-ROIs and the object location information corresponding to each of the set of object-ROIs classified as the fitting.

The computing device 102, in order to calculate the connector association index, may determine an intersection over union between each of the set of text-ROIs with at least one of the set of object-ROls classified as the connector based on the corresponding text location information of the set of text-ROls and the object location information corresponding to each of the set of object-ROIs classified as the connector.

The computing device 102 may determine a set of lines based on determination of a skeletonized image of the non-editable schematic illustration, using an image processing technique. In an embodiment, examples of the image processing technique may include, but are not limited to, a Hough Transform technique, an edge detection technique, a line segment detection technique, a radon transform, a line detection technique, and a convolutional neural network (CNN) technique. In an embodiment, the set of lines may be determined based on a determination of a set of vertical lines, a set of horizontal lines, and a set of angular lines.

In an embodiment, the computing device 102 may also calculate a line association index. The computing device 102, in order to calculate the line association index, may determine a set of line-text ROIs from the set of text-ROIs based on a matching between the line-list metadata and location information of the set of lines. The computing device 102, in order to calculate the line association index, may further determine an intersection over union between each of the set of line-text ROIs and at least one of the set of lines based on the corresponding text location information of each of the set of line-text ROIs and the corresponding location information of each of the set of lines.

The computing device 102 may further generate the editable schematic illustration based on the text metadata, the entity metadata, the association information, and the set of lines in an editable file format. The computing device 102, in order to generate the editable schematic illustration, may create the editable schematic illustration using a computer-aided design (CAD) component-based algorithm based on the text metadata, the entity metadata, and the association information, and the set of lines. In an embodiment, the editable schematic illustration may correspond to the P&ID.

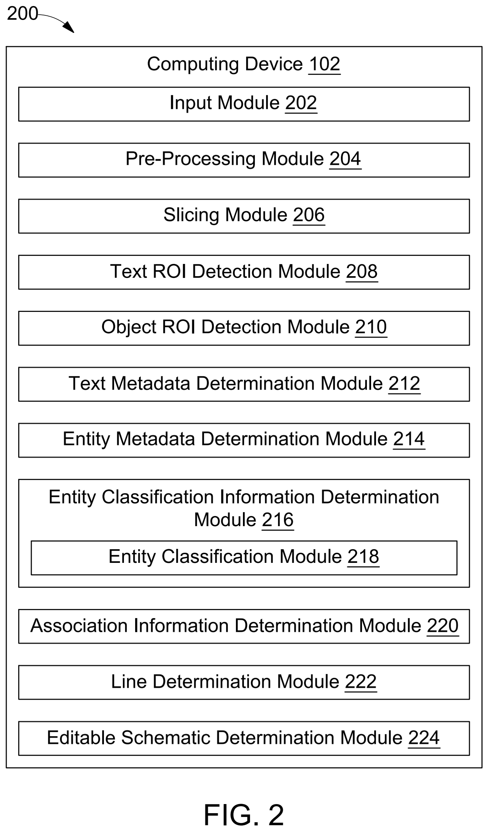

Referring now to **FIG. 2****,** a functional block diagram 200 of the computing device 102 of the exemplary system of **FIG. 1**, is illustrated, in accordance with an embodiment of the present disclosure. The computing device 102 may include an input module 202, a pre-processing module 204, a slicing module 206, a text ROI detection module 208, an object ROI detection module 210, a text metadata determination module 212, an entity metadata determination module 214, an entity classification information determination module 216, an association information determination module 220, a line determination module 222, an editable schematic determination module 224.

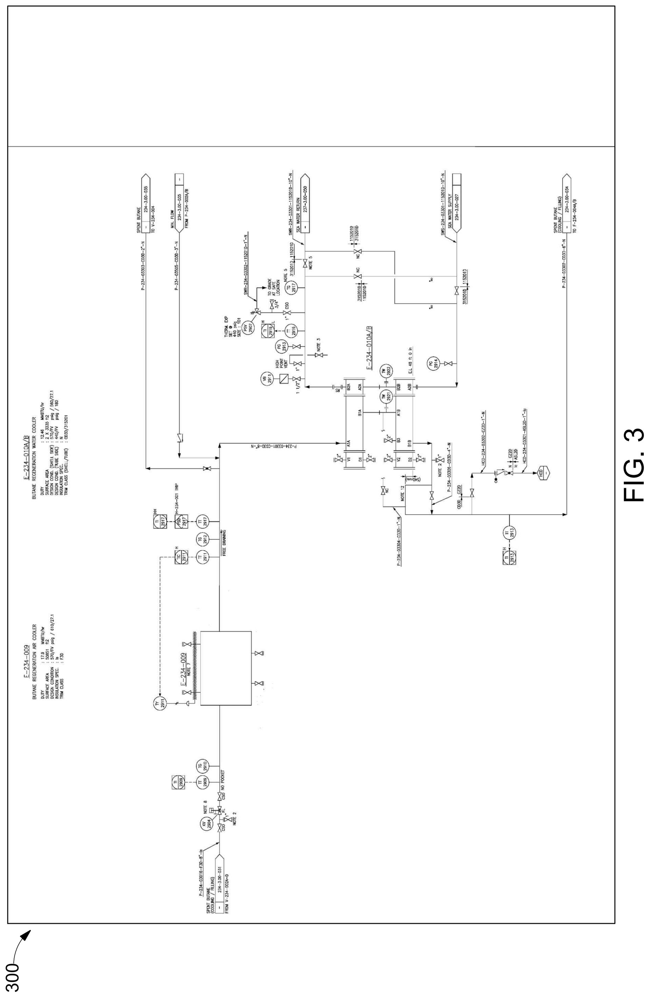

The input module 202 may receive a non-editable schematic illustration as an input. It should be noted that the input may be indicated or provided by a user via the I/O device 108. In an embodiment, the non-editable schematic illustration may correspond to a Piping and Instrument Diagram (P&ID). In an embodiment, the P&ID may be a schematic illustration of a Piping and Instrument system used in industries. In an embodiment, the non-editable schematic illustration may be provided in various formats, including but not limited to, image files (e.g., PNG, JPEG), or document formats (e.g., PDF). Referring now to **FIG. 3**, the non-editable schematic illustration 300, is illustrated, in accordance with an embodiment of the present disclosure. In an embodiment, the non-editable schematic illustration 300 may include a plurality of interconnected components representing an industrial process, such as pipelines, valves, sensors, actuators, and other instrumentation typically used in industries. In an embodiment, the non-editable schematic illustration 300 may also include annotations, identifiers, and standardized symbols that denote specific process elements and their interconnections.

Referring back to **FIG. 2**, the pre-processing module 204 may pre-process the non-editable schematic illustration 300 by extracting a set of contours using an inverse gray image of the non-editable schematic illustration 300. The pre-processing module 204, in order to pre-process the non-editable schematic illustration 300, may further determine area information of each of the set of contours. The pre-processing module 204, in order to pre-process the non-editable schematic illustration 300, may further crop one of the set of contours having an area greater than a predefined ratio of an area of the non-editable schematic illustration 300. In an embodiment, the pre-processing module 204 may determine a portion of the non-editable schematic illustration 300 based on cropping the one of the set of contours having an area greater than the predefined ratio of the area of the non-editable schematic illustration 300.

In an exemplary embodiment, the pre-processing module 204, in order to pre-process the non-editable schematic illustration 300, may first convert the non-editable schematic illustration 300 into a grayscale image, followed by applying a contour extraction technique to identify all significant contours present in the non-editable schematic illustration 300. In an embodiment, the contour extraction technique may utilize a tree-based hierarchical method to organize the extracted contours into a hierarchy structure. The hierarchy structure may include four values for each contour: a next contour index (N), a previous contour index (P), a first child contour index (C), and a parent contour index (Pa). The pre-processing module 204 may analyse the hierarchy structure to identify contours that have a parent index and an area greater than a predefined area threshold. In an exemplary implementation, the predefined area threshold may be set to at least 50% of the total area of the non-editable schematic illustration 300. Upon identifying a suitable contour, the pre-processing module 204 may determine the bounding rectangle of the largest contour referred herein as the portion of the portion of the non-editable schematic illustration 300, which returns coordinates in the form of (x, y, w, h), where x represents the x-coordinate of the top-left corner of the portion, y represents the y-coordinate of the top-left corner of the portion, w represents the width of the portion, and h represents the height of the portion. These values are used to crop the non-editable schematic illustration 300 to determine the portion of the non-editable schematic illustration 300. In an exemplary embodiment, if no suitable contour is found that meets the predefined area threshold, the pre-processing module 204 may create a full-image rectangle including the entire non-editable schematic illustration 300.

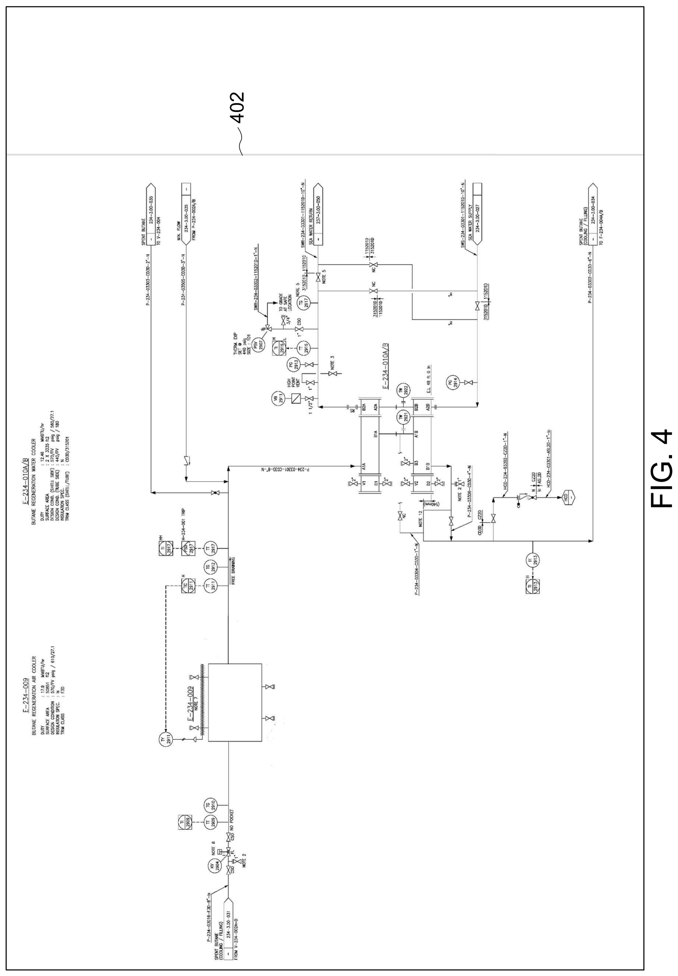

Referring now to **FIG. 4**, cropping of the non-editable schematic illustration 300, is depicted, in accordance with an embodiment of the present disclosure. In an embodiment, the pre-processing module 204 may process the non-editable schematic illustration 300 to crop the non-editable schematic illustration 300. The cropping process may include extracting the set of contours using an inverse gray image of the non-editable schematic illustration 300. Further, the pre-processing module 204 may determine area information of each of the set of contours. Further, the pre-processing module 204 may crop one of the set of contours 402 having an area greater than a predefined ratio of an area of the non-editable schematic illustration 300. For instance, contours having an area greater than a predefined percentage, such as 50% of the entire area of the non-editable schematic illustration 300, may be selected for further processing. In an embodiment, the pre-processing module 204 may determine the portion of the non-editable schematic illustration 300 based on cropping the one of the set of contours 402 having an area greater than the predefined ratio of the area of the non-editable schematic illustration.

Referring back to **FIG. 2**, the slicing module 206 may slice the non-editable schematic illustration 300 into a set of slices each of a predefined size. In an alternate embodiment, the slicing module 206 may slice the portion of the non-editable schematic illustration 300 into the set of slices each of a predefined size. In an exemplary embodiment, the slicing module 206 may analyse dimensions of the non-editable schematic illustration 300 and divide the non-editable schematic illustration 300 into smaller, manageable slices for further processing. In an alternate embodiment, the slicing module 206 may analyse dimensions of the portion of the non-editable schematic illustration 300 and divide the portion into smaller, manageable slices for further processing. The predefined size of each slice may be based on operational requirements, such as resolution of the non-editable schematic illustration 300, or element density in the non-editable schematic illustration 300. In an embodiment, the slicing process may involve segmenting the non-editable schematic illustration 300 using a grid-based technique, where the slicing module 206 may apply horizontal and vertical slicing at uniform intervals to generate rectangular slices of the non-editable schematic illustration 300.

Thereafter, the text ROI detection module 208 may detect a set of text-region of interests (text-ROls) corresponding to text data in the non-editable schematic illustration 300 using an Optical Character Recognition (OCR) technique. In an alternate embodiment, the text ROI detection module 208 may detect a set of text-region of interests (text-ROls) corresponding to text data in the portion of the non-editable schematic illustration. In an embodiment, the set of text-ROls may be detected based on detection of the text data in each of the set of slices. In an embodiment, examples of the OCR technique may include, but are not limited to, a template matching technique, a feature extraction technique, a pattern recognition technique, a deep learning-based OCR technique, a projection and segmentation technique, a lexicon-based OCR technique, and a morphological processing technique.

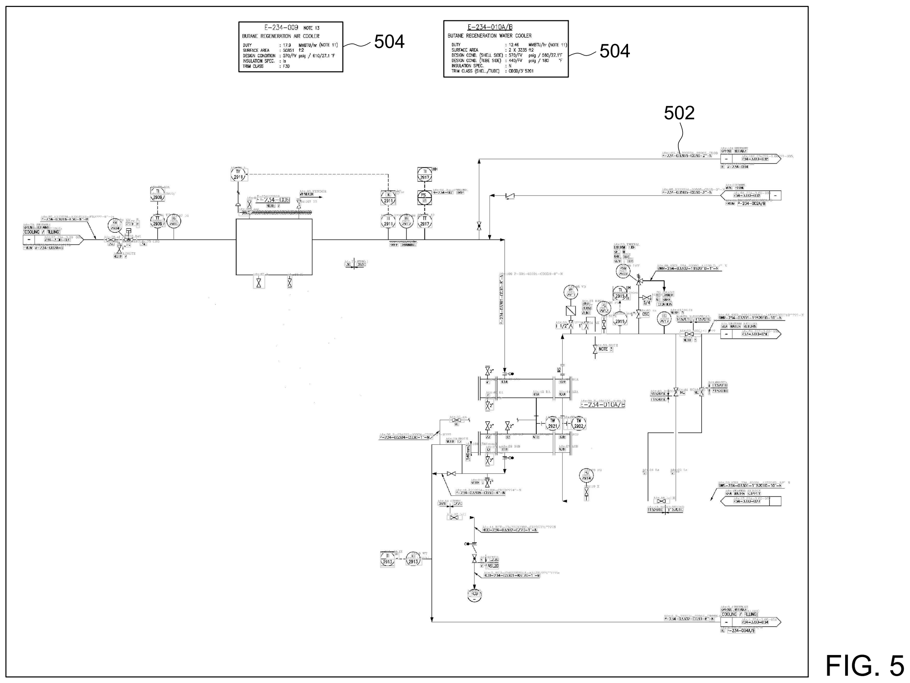

Referring now to **FIG. 5**, detection of the set of text-region of interests (text-ROls) 502, is depicted, in accordance with an embodiment of the present disclosure. The text ROI detection module 208 may detect the set of text-ROls 502 corresponding to text data present in the non-editable schematic illustration 300 using an Optical Character Recognition (OCR) technique. In an alternate embodiment, the text ROI detection module 208 may detect the set of text-ROIs 502 corresponding to text data present in the portion of the non-editable schematic illustration using the OCR technique. In an embodiment, the detected set of text-ROIs 502 may represent areas within the non-editable schematic illustration 300 that may include textual information such as labels, annotations, equipment identifiers, and process parameters. In an alternate embodiment, the detected set of text-ROls 502 may represent areas within the portion of the non-editable schematic illustration. In an embodiment, the detected set of text-ROIs 502 may be represented as bounding boxes that may include text data within the non-editable schematic illustration 300. These bounding boxes, as shown in **FIG. 5**, may provide visual indications of the set of text-ROls 502 detected during the OCR process. In an embodiment, the detected set of text-ROIs 502 may be stored in an intermediate data structure, such as JSON or XML format.

Referring back to **FIG. 2**, the object ROI detection module 210 may detect a set of object-region of interests (object-ROIs) corresponding to a plurality of object-entities in the non-editable schematic illustration 300 using an object detection technique. In an alternate embodiment, the object ROI detection module 210 may detect the set of object-ROls corresponding to a plurality of object-entities in the portion of the non-editable schematic illustration 300. In an embodiment, the plurality of object-entities may include, but are not limited to, lines, instruments, valves, fittings, equipment, and connectors. In an embodiment, the lines may include, but are not limited to, O-sign lines, double slash lines, dotted lines, and flow arrows. In an embodiment, the instruments may include, but are not limited to, shared indicators, indicators, computer indicators, and programmable indicators. In an embodiment, the valves may include, but are not limited to, gate valves, check valves, glove valves, butterfly valves, needle valves, and three-way valves. In an embodiment, the fittings may include, but are not limited to, flanges, caps, reducers, hose connections, and spectacle blinds. In an embodiment, the equipment may include, but are not limited to, air coolers, water coolers, and tube and shell exchangers. In an embodiment, the connectors may include, but are not limited to, inlet-outlet (IN-OUT) connectors, rectangle connectors, utility connectors, and drain connectors.

In an embodiment, the set of object-ROIs may be detected based on detection of the plurality of object-entities in each of the set of slices. In an embodiment, examples of the object detection technique may include, but are not limited to, a cascade classifier technique, a support vector machine, a template matching technique, a region-based convolutional neural network (R-CNN), a YOLO technique, an EfficientDet technique, a RetinaNet technique, a vision transformers technique, and a CenterNet technique. In an embodiment, the object ROI detection module 210 may detect the plurality of object-entities present in the non-editable schematic illustration 300, such as lines, instruments, valves, fittings, equipment, and connectors. Each of these object-entities may be detected by analysing individual slices of the non-editable schematic illustration 300, with each slice being processed independently to detect and classify object-entities within the respective set of object-ROIs.

Thereafter, the text metadata determination module 212 may determine text metadata from the set of text-ROIs 502 using the OCR technique. In an embodiment, the text metadata may include text information, text orientation information, and text location information associated to each of the set of text-ROIs 502. The text metadata may also include equipment-list metadata and line-list metadata. The text metadata determination module 212 may determine the equipment-list metadata by determining a set of equipment-list ROIs 504 from the set of text-ROls 502 having the text orientation information equal to zero degrees from a predefined portion of the non-editable schematic illustration. In an embodiment, the equipment-list metadata may be determined as text data from the set of equipment-list ROIs 504. The text metadata determination module 212 may determine the line-list metadata based on detection of a predefined delimiter and a predefined symbol in the text metadata determined from the set of text-ROIs 502.

In an exemplary embodiment, the text orientation information may be determined by analysing orientation of each of the set of text-ROIs 502 from the OCR output. The orientation information may be stored within a fourchannel image matrix representation, such as an [RGBA] format, where each channel corresponds to a predefined text orientation angle, including 0 degrees, 90 degrees, 180 degrees, and 270 degrees. The text metadata determination module 212 may classify the set of text-ROIs 502 accordingly and store the text orientation information for further processing. For instance, text detected at an orientation of 90 degrees, or 270 degrees may undergo orientation correction to normalize the text representation before further processing. Once the orientation correction is performed, the text data, along with coordinates of each of the set of text-ROls 502 and associated text metadata, may be stored in a structured format, such as JSON or XML format.

In an exemplary embodiment, the set of equipment-list ROIs 504 may be determined from a predefined portion of the non-editable schematic illustration 300, typically representing standard equipment lists. In an embodiment, the determination process may involve cropping 10% above and 10% below the central region of height of the non-editable schematic illustration 300 and applying dilation operations based on the character dimensions of the text data to ensure complete coverage of the equipment-list metadata. Following the cropping operation, a contour filtering technique may be employed to isolate relevant text regions by detecting contours whose top and bottom boundaries align with predefined threshold values, such as 10% and 97% of the height of the non-editable schematic illustration 300.

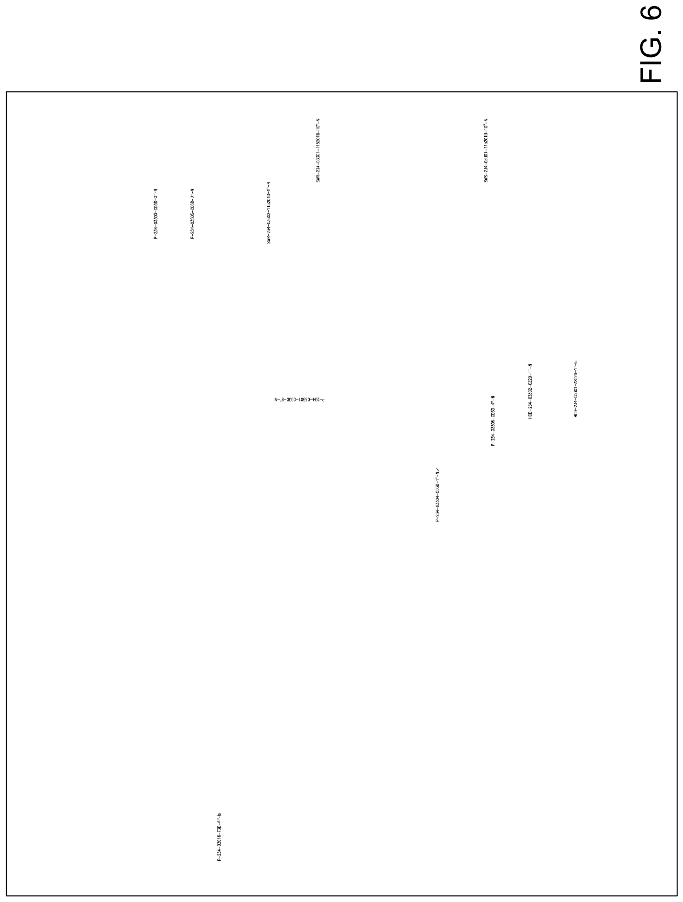

Referring now to **FIG. 6**, determination of line-list metadata from the set of text-ROls 502, is depicted, in accordance with an embodiment of the present disclosure. The text metadata determination module 212 may analyse the set of text-ROls 502 to identify line-list metadata by detecting predefined delimiters and symbols within the determined text metadata. In an embodiment, the line-list metadata may be identified by analyzing the text data in the non-editable schematic illustration 300 containing specific patterns, such as numeric values, alphabetic characters, and special characters like hyphens ("-") or quotation marks ("). In an alternate embodiment, the line-list metadata may be identified by analyzing the text data in the portion of the non-editable schematic illustration 300. The text metadata determination module 212 may apply regular expression (regex) patterns to filter and extract text elements that follow predefined delimiters and symbols, such as verifying that the length of the split text by the delimiter exceeds a predefined threshold, such as three segments. The line-list metadata determination process may further refine the extracted text data by isolating structured data components, such as pipe dimensions (e.g., "4-inch pipe"), equipment identifiers, or alphanumeric codes commonly used in the P&IDs.

Referring back to **FIG. 2**, the entity metadata determination module 214 may determine entity metadata from the set of object-ROIs using the object detection technique. In an embodiment, the entity metadata may include object orientation information, class label information, and object location information associated to each of the set of object-ROls. The class label information of each of the set of object-ROls may be determined based on a classification of each of the set of object-ROIs as one of a plurality of predefined classes and as one of a plurality of predefined sub-classes of each of the plurality of predefined classes using the object detection technique. In an embodiment, the plurality of predefined classes may include, but are not limited to, a line, an instrument, a valve, a fitting, an equipment, and a connector. In an embodiment, the plurality of predefined sub-classes of the line may include, but are not limited to, an O-sign line, a double slash line, a dotted line, and a flow arrow. In an embodiment, the plurality of predefined sub-classes of the instrument may include, but are not limited to, a shared indicator, an indicator, a computer indicator, and a programmable indicator. In an embodiment, the plurality of predefined sub-classes of the valve may include, but are not limited to, a gate valve, a check valve, a glove valve, a butterfly valve, a needle valve, and a three-way valve. In an embodiment, the plurality of predefined sub-classes of the fitting may include, but are not limited to, a flange, a cap, a reducer, a hose connection, and a spectacle blind. In an embodiment, the plurality of predefined sub-classes of the equipment may include, but are not limited to, an air cooler, a water cooler, and a tube and shell exchanger. In an embodiment, the plurality of predefined sub-classes of the connector may include, but are not limited to, an inlet-outlet (IN-OUT) connector, a rectangle connector, a utility connector, a drain connector.

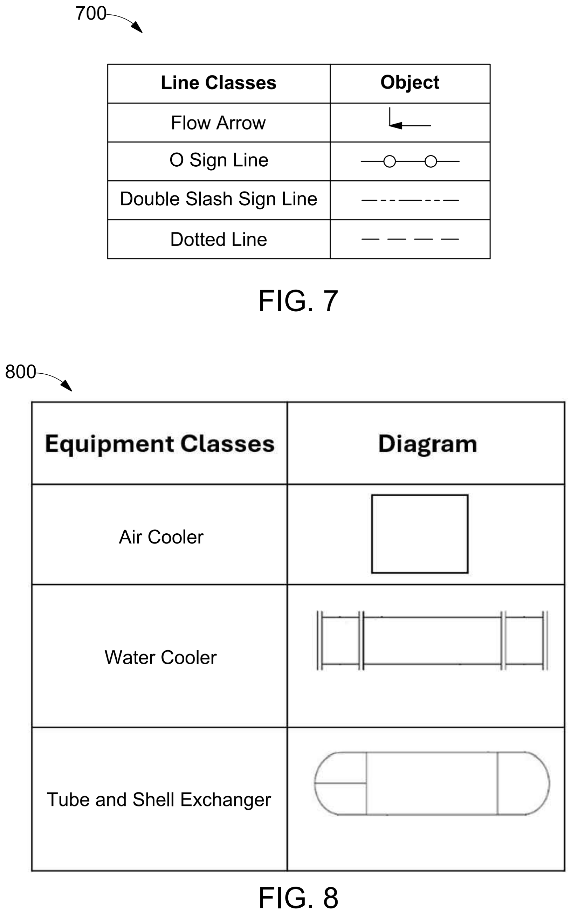

Referring now to **FIG. 7**, a table 700 depicting a plurality of predefined sub-classes of the line, is illustrated in accordance with an embodiment of the present disclosure. The table 700 provides a classification of different types of line entities commonly found in the non-editable schematic illustration 300, such as the P&ID. Each predefined sub-class of the line corresponds to a specific type of line representation. As shown in **FIG. 7**, the plurality of predefined sub-classes of the line may include the flow arrow, the O-sign line, the double slash sign line, and the dotted line. In an embodiment, the flow arrow sub-class may represent the directional movement of fluid within the pipeline of the Piping and Instrument system, typically used to indicate process flow direction. In an embodiment, the O-sign line sub-class may be used to denote specific pipeline connections or measurement points, while the double slash sign line and the dotted line sub-classes may be used to indicate different pipeline types, such as control lines, insulation boundaries, or temporary connections. The classified line sub-classes may be stored in an intermediate data structure, such as a JSON or XML file, along with their associated entity metadata.

Referring now to **FIG. 8**, a table 800 depicting a plurality of predefined sub-classes of the equipment, is illustrated, in accordance with an embodiment of the present disclosure. The table 800 provides a classification of the equipment into the plurality of predefined sub-classes commonly used in the non-editable schematic illustration 300, such as the P&ID. In an embodiment, the plurality of predefined sub-classes of the equipment may include, but are not limited to, pumps, compressors, heat exchangers, vessels, tanks, and boilers. In an embodiment, the pump sub-class may represent devices used to move fluids within the Piping and Instrument system, commonly identified by their distinct schematic symbols such as centrifugal or positive displacement pump icons. The compressor sub-class may include representations of mechanical devices used to increase the pressure of gases within the Piping and Instrument system, typically symbolized by rotary or reciprocating compressor icons. The heat exchanger sub-class may represent devices used to transfer heat between two or more fluids within the Piping and Instrument system, such as shell-and-tube or plate-type heat exchangers. In an embodiment, the vessel sub-class may include representations of pressure-containing equipment designed to store or process fluids under varying pressure conditions, such as reactors or separators. In an embodiment, the tank sub-class may denote large fluid storage containers, identified by their characteristic cylindrical or rectangular shapes in the non-editable schematic illustration 300. The boiler sub-class may include representations of devices used to generate steam or hot water for industrial processes. The classified equipment sub-classes may be stored in an intermediate data structure, such as a JSON or XML file, along with their associated entity metadata.

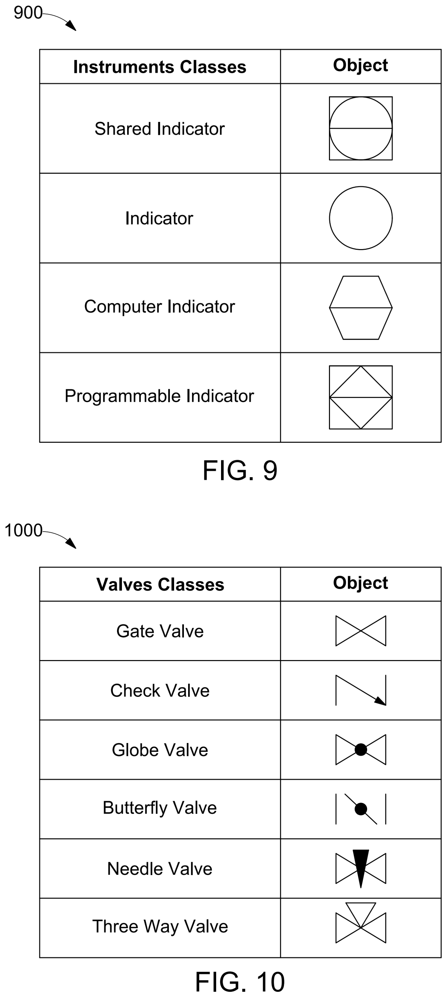

Referring now to **FIG. 9**, a table 900 depicting a plurality of predefined sub-classes of an instrument, is illustrated, in accordance with an embodiment of the present disclosure. The table 900 provides a classification of the plurality of predefined sub-classes of the instrument used in the non-editable schematic illustration 300, such as P&ID. As illustrated in **FIG. 9**, the plurality of predefined sub-classes of the instrument may include, but are not limited to, a shared indicator, an indicator, a computer indicator, and a programmable indicator. The shared indicator sub-class represents an instrument shared across multiple process units, often depicted with a double-circle symbol. The indicator sub-class represents a basic measuring instrument displaying process variables such as pressure, temperature, or flow, typically represented by a simple circular symbol. The computer indicator sub-class includes instruments that display process data through computerized systems and are commonly represented by hexagonal symbols. The programmable indicator sub-class refers to advanced instruments with configurable functionality, often symbolized by a square enclosing an internal configuration pattern. The classified instrument sub-classes may be stored in an intermediate data structure, such as a JSON or XML file, along with their associated entity metadata.

Referring now to **FIG. 10**, a table 1000 depicting a plurality of predefined sub-classes of the valve, is illustrated, in accordance with an embodiment of the present disclosure. The table 1000 provides a structured classification of various valves as the plurality of predefined sub-classes commonly used in the non-editable schematic illustration 300, such as the P&ID. As illustrated in **FIG. 10**, the plurality of predefined sub-classes of the valve may include, but are not limited to, a gate valve, a check valve, a globe valve, a butterfly valve, a needle valve, and a three-way valve. In an embodiment, the gate valve sub-class may represent a linear motion valve used to start or stop fluid flow in the Piping and Instrument system. The check valve sub-class may indicate a unidirectional valve that prevents reverse flow. The globe valve sub-class may be used to regulate flow. The butterfly valve sub-class, which may be used for quick shut-off applications, and may be represented by a disc symbol within two parallel lines. The needle valve sub-class may be designed for precision flow control. The three-way valve sub-class may represent a valve with three ports used to divert or mix flow, typically illustrated by a T-shaped or Y-shaped symbol. The classified valve sub-classes may be stored in an intermediate data structure, such as a JSON or XML file, along with their associated entity metadata.

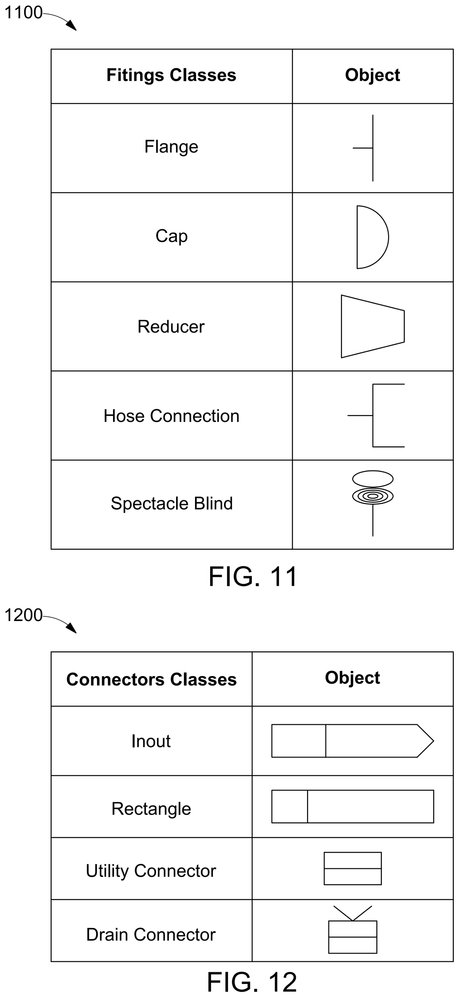

Referring now to **FIG. 11**, a table 1100 depicting a plurality of predefined sub-classes of the fitting, is illustrated, in accordance with an embodiment of the present disclosure. The table 1100 provides a structured representation of various sub-classes within the fitting, commonly used in the non-editable schematic illustration 300 such as the P&ID. As illustrated in **FIG. 11**, the plurality of predefined sub-classes of the fitting may include, but are not limited to, a flange, a cap, a reducer, a hose connection, and a spectacle blind. The flange sub-class may represent a piping component used to connect pipes, valves, and other equipment, typically represented by a symbol featuring a perpendicular line intersecting a vertical line. The cap sub-class may indicate an end component used to terminate pipe sections, symbolized by a closed circular or semi-circular end. The reducer sub-class may represent a component that allows for a change in pipe diameter, commonly depicted by a conical or tapered shape within the non-editable schematic illustration 300. The hose connection sub-class may denote a fitting that facilitates flexible hose connections to piping systems, illustrated using an L-shaped or T-shaped symbol. The spectacle blind sub-class may be used to isolate piping sections for maintenance purposes, represented by a symbol showing two connected circles, indicating open and closed positions. The classified fittings sub-classes may be stored in an intermediate data structure, such as a JSON or XML file, along with their associated entity metadata.

Referring now to **FIG. 12**, a table 1200 depicting a plurality of predefined sub-classes of the connector, is illustrated, in accordance with an embodiment of the present disclosure. The table 1200 provides a structured classification of various connector sub-classes commonly used in the non-editable schematic illustration 300, such as the P&ID. As illustrated in **FIG. 12**, the plurality of predefined sub-classes of the connector may include, but are not limited to, an inlet-outlet (IN-OUT) connector, a rectangle connector, a utility connector, and a drain connector. The IN-OUT connector sub-class may be commonly used to indicate the entry and exit points of process fluids in the Piping and Instrument system and may be typically represented by an arrow pointing towards or away from a rectangular block. The rectangle connector sub-class may represent generic connection points often used to denote boundary crossings or interface connections within the non-editable schematic illustration 300. The utility connector sub-class may be used to indicate connections related to auxiliary systems, such as air, water, or steam utilities, and is often symbolized by a simple rectangular shape. The drain connector sub-class may represent a designated point for fluid drainage within the Piping and Instrument system and may be typically illustrated by a funnel-shaped symbol.

Thereafter, the entity classification information determination module 216 may include an entity classification module 218. The entity classification information determination module 216 may determine entity classification information of one or more of the set of object-ROIs. The entity classification module 218, in order to determine the entity classification information of the one or more of the set of object-ROIs, may classify the one or more of the set of object-ROIs as one of a plurality of predefined child-classes based on the class label information of a corresponding object-ROI using a Deep Learning (DL) model. In an embodiment, examples of the DL model may include, but are not limited to, a Recurrent Neural Network (RNN), a Bidirectional LSTM, a Convolutional Neural Network (CNN), a transformer-based model, a graph neural network, a sequence-to-sequence (Seqq2Seq) model, a multi-task learning model. In an embodiment, the classified equipment sub-classes may be stored in an intermediate data structure, such as a JSON or XML file, along with their associated metadata.

Referring back to **FIG. 2**, the entity classification module 218, in order to determine the entity classification information of the set of object-ROls sub-classified as the flow arrow, may classify the one or more of the set of object-ROls sub-classified as the flow arrow as one of the plurality of predefined child-classes that may include a left flow arrow, an up flow arrow, a down flow arrow, a right flow arrow, an up-left flow arrow, an up-right flow arrow, a down-right flow arrow, and a down-left flow arrow. The entity classification module 218, in order to classify the one or more of the set of object-ROIs sub-classified as the flow arrow, may determine a set of arrow-ROls from the set of object-ROls sub-classified as the flow arrow. The entity classification module 218, in order to classify the one or more of the set of object-ROls sub-classified as the flow arrow, may further determine a direction of each of the set of arrow-ROIs from a plurality of directions using a direction classification model. In an embodiment, the entity classification information of the flow arrows may be stored in a structured data format, such as JSON or XML for further processing.

The entity classification module 218, in order to determine the entity classification information of the set of object-ROls sub-classified as the rectangle connector, may classify the one or more of the set of object-ROIs sub-classified as the rectangle connector as one of the plurality of predefined child-classes that may include an outlet connector and an inlet connector. The entity classification module 218, in order to classify the one or more of the set of object-ROls sub-classified as the rectangle connector, may classify the set of object-ROls sub-classified as the rectangle connector as one of the outlet connector or the inlet connector based on detection of a set of predefined keywords in the text metadata associated to the one or more of the set of object-ROls.

In an exemplary embodiment, the entity classification module 218, in order to classify the one or more of the set of object-ROls sub-classified as the rectangle connector, may analyse the text metadata associated with each of the set of the object-ROls sub-classified as the rectangle connectors to determine its classification. The text metadata may be extracted using the Optical Character Recognition (OCR) techniques and may contain relevant keywords or annotations that indicate the function of the rectangle connector. For example, the entity classification module 218 may classify a rectangle connector as an outlet connector if the associated text data includes the predefined keyword "TO," indicating a directional flow direction. Conversely, the entity classification module 218 may classify the rectangle connector as an inlet connector if the associated text data includes the predefined keyword "FROM," indicating an incoming flow direction.

The entity classification module 218, in order to determine the entity classification information of the set of object-ROls sub-classified as the IN-OUT connector, may classify the one or more of the set of object-ROIs sub-classified as the IN-OUT connector as one of the plurality of predefined child-classes that may include an inlet connector and an outlet connector. The entity classification module 218, in order to classify the one or more of the set of object-ROIs sub-classified as the IN-OUT connector, may determine one or more portions of the non-editable schematic illustration. Each of the one or more portions may include one or more of the set of object-ROIs sub-classified as the IN-OUT connector using the object detection technique. The entity classification module 218, in order to classify the one or more of the set of object-ROIs sub-classified as the IN-OUT connector, may determine a width of the one or more portions of the non-editable schematic illustration. In an embodiment, the entity classification module 218 may also analyse each portion to detect the presence of predefined keywords within the text metadata associated with the IN-OUT connectors. In an embodiment, if the extracted text metadata includes the keyword "FROM," the corresponding IN-OUT connector is classified as an inlet connector. Alternatively, if the text metadata contains the keyword "TO," the corresponding IN-OUT connector is classified as an outlet connector.

The entity classification module 218, in order to classify the one or more of the set of object-ROls sub-classified as the IN-OUT connector, may determine a width of each of the set of object-ROls sub-classified as the IN-OUT connector. The entity classification module 218, in order to classify the one or more of the set of object-ROIs sub-classified as the IN-OUT connector, may further determine a top-left x-coordinate of each of the set of object-ROls sub-classified as the IN-OUT connector. The entity classification module 218, in order to classify the one or more of the set of object-ROIs sub-classified as the IN-OUT connector, may detect a centre point from a plurality of edge points in each of the set of object-ROIs sub-classified as the IN-OUT connector. In an embodiment, one point from the plurality of edge points may be determined as the centre point in case the one point is at an acute angle with respect to a nearest point from the plurality of edge points. In an exemplary embodiment, the centre point of each of the set of object-ROIs sub-classified as the IN-OUT connector may be detected based on an analysis of a plurality of edge points of the corresponding object-ROI. The detection process may involve identifying the boundary points of the object-ROI using an edge detection technique and analyzing their spatial distribution. One edge point from the plurality of edge points may be determined as the centre point if the edge point forms an acute angle with respect to its nearest edge point within the plurality of detected edge points. The acute angle determination may be performed by calculating the angular relationship between the selected edge point and adjacent edge points using geometric computations such as vector analysis or trigonometric functions.

Accordingly, the entity classification module 218 may classify each of the set of object-ROls sub-classified as the IN-OUT connector as one of the outlet connector or the inlet connector. In an embodiment, an object-ROI from the set of object-ROIs sub-classified as the IN-OUT connector may be classified as the inlet connector in case at least one of a centre point of the object-ROI may be detected in a left of the object-ROI, else the set of object-ROIs sub-classified as the IN-OUT connector may further be classified as the outlet connector and the centre point of the object-ROI may be detected in a right half of the object-ROI and a summation of the top-left x-coordinate of the object-ROIs sub-classified as the IN-OUT connector may be classified as the outlet connector.

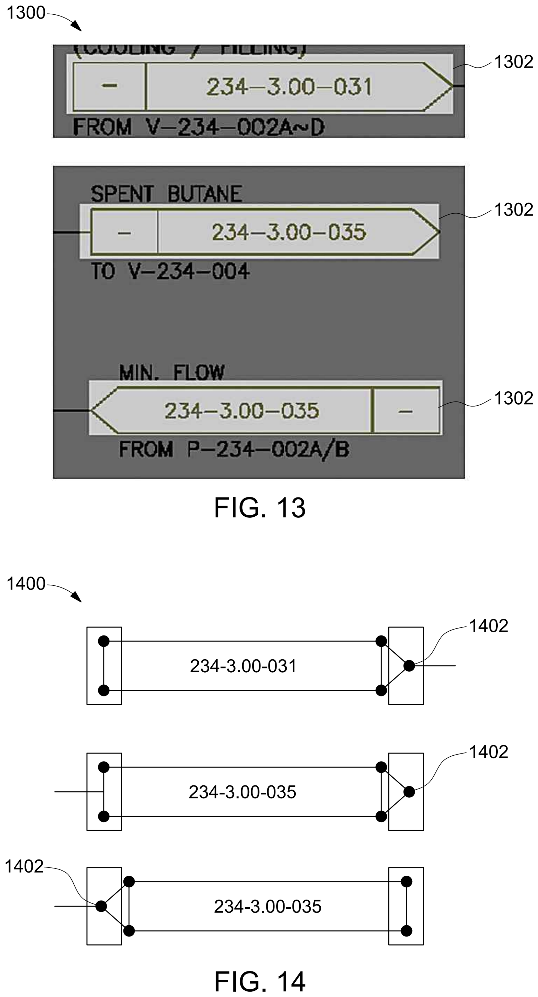

Referring now to **FIG. 13**, one or more portions 1300 of the non-editable schematic illustration 300 of **FIG. 3**, is illustrated, in accordance with an embodiment of the present disclosure. The illustrated one or more portions 1300 correspond to sections of the non-editable schematic illustration 300, where the set of object-ROIs 1302 sub-classified as the IN-OUT connectors are identified. Each portion 1300 of the non-editable schematic illustration 1300 may include one or more IN-OUT connectors, which may be subjected to further classification. In an exemplary embodiment, the entity classification module 218, in order to classify the set of object-ROIs sub-classified as the IN-OUT connectors within the one or more portions 1300, may determine a width of each of the one or more portions 1300 of the non-editable schematic illustration 300.

Referring now to **FIG. 14**, the classification of the set of object-ROIs 1302 sub-classified as the IN-OUT connector, is depicted, in accordance with an embodiment of the present disclosure. The entity classification module 218, in order to classify the set of object-ROIs 1302 sub-classified as the IN-OUT connector, may determine a width of each of the set of object-ROIs 1302 sub-classified as the IN-OUT connector within the one or more portions 1300 of the non-editable schematic illustration 300. The entity classification module 218 may further determine a top-left x-coordinate of each of the set of object-ROIs 1302 sub-classified as the IN-OUT connector. In order to classify the set of object-ROls 1302 sub-classified as the IN-OUT connector, the entity classification module 218 may detect a centre point 1402 from a plurality of edge points within each of the set of object-ROIs 1302 sub-classified as the IN-OUT connector. In an embodiment, a point from the plurality of edge points may be determined as the centre point 1402 if the point is at an acute angle with respect to the nearest point from the plurality of edge points.

Accordingly, the entity classification module 218 may classify each of the set of object-ROIs 1302 sub-classified as the IN-OUT connector as either an inlet connector or an outlet connector. In an embodiment, an object-ROI 1302 may be classified as an inlet connector if the detected centre point 1402 is positioned in the left half of the object-ROI. Conversely, the object-ROI 1302 may be classified as an outlet connector if the centre point 1402 may be positioned in the right half of the object-ROI 1302, and the summation of the top-left x-coordinate and the width of the object-ROI 1302 aligns with a right boundary of the non-editable schematic illustration 300.

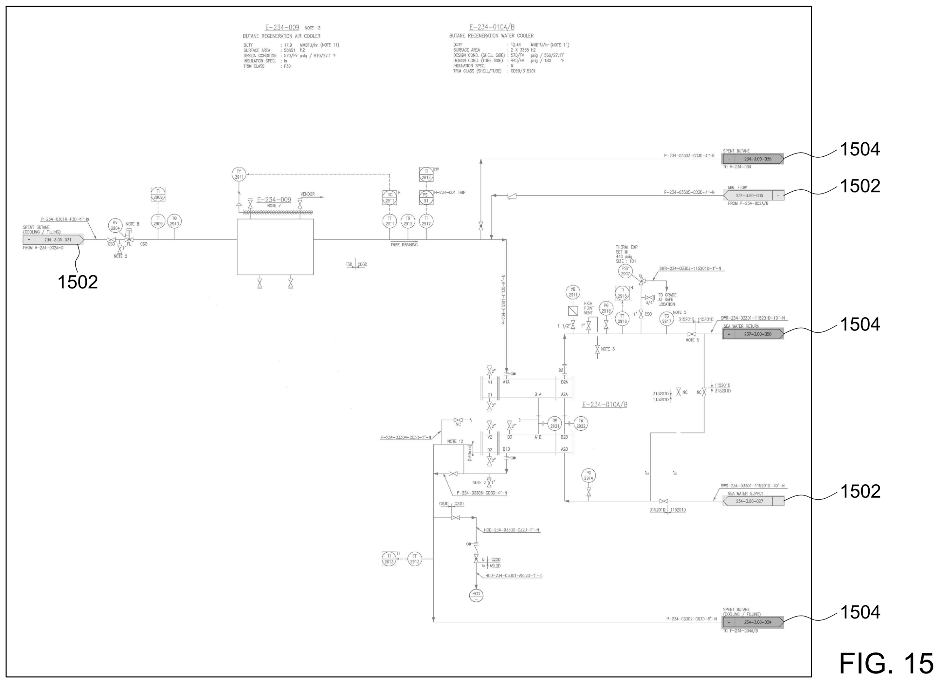

Referring now to **FIG. 15**, the classified set of object-ROIs as the inlet connectors 1502 and the outlet connectors 1504, is depicted, in accordance with an embodiment of the present disclosure. The set of object-ROls 1302 sub-classified as the IN-OUT connectors may be further classified into their respective child-classes, including the inlet connectors 1502 and the outlet connectors 1504. In an embodiment, the entity classification module 218 may classify the set of object-ROIs 1302 sub-classified as the IN-OUT connectors, as described in **FIG. 13** and **FIG. 14****.** The inlet connectors 1502 may be positioned at locations where fluid enters the Piping and Instrument system, while the outlet connectors 1504 represent points where fluid exits the Piping and Instrument system.

Referring back to **FIG. 2**, the association information determination module 220 may determine association information between each of the set of text-ROIs 502 and at least one of the set of object-ROIs by calculating an association index based on the text metadata and the entity metadata and the entity classification information. The association index may include an equipment association index, an instrument association index, a valve association index, a fitting association index, and a connector association index. The association information determination module 220, in order to calculate the equipment association index, may determine a set of equipment-text ROIs from the set of text-ROIs 502 based on a matching between the equipment-list metadata and the class label information of each of the set of object-ROIs. The association information determination module 220, in order to calculate the equipment association index, may further determine a minimum distance between each of the set of equipment-text ROIs and at least one of the set of object-ROIs classified as the equipment based on the corresponding text location information of each of the set of equipment-text ROIs and the corresponding object location information of each of the set of object-ROIs classified as the equipment.

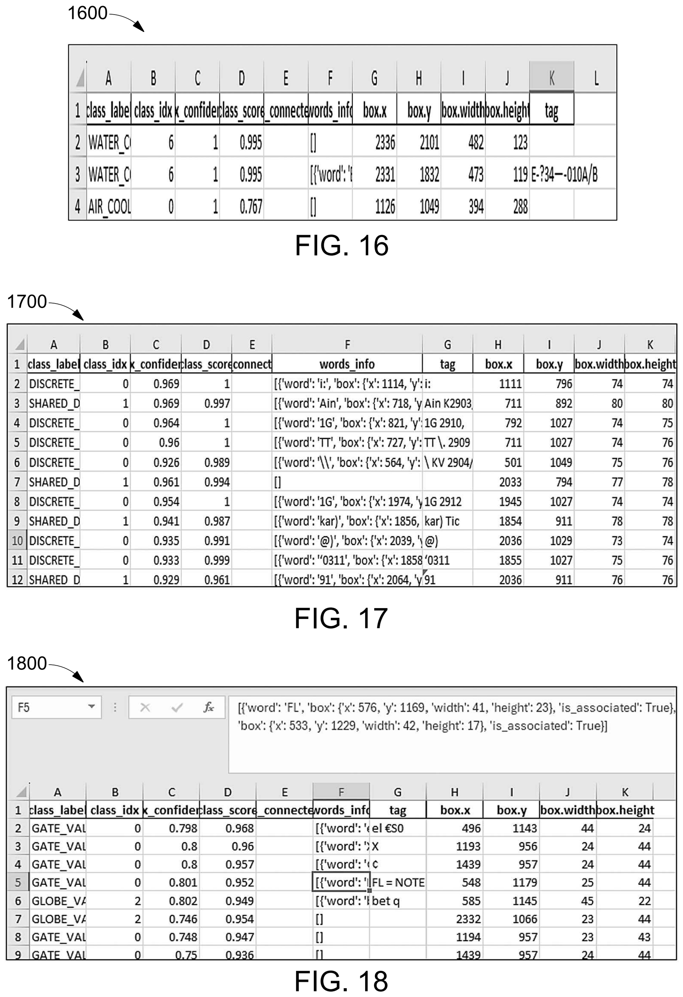

Referring now to **FIG. 16**, a table 1600 depicting association information between the set of text-ROIs 502 and the set of object-ROIs classified as the equipment, is illustrated, in accordance with an embodiment of the present disclosure. The table 1600 depicts a representation of the association information determined between the set of text-ROIs 502 and the set of object-ROIs classified as the equipment. The equipment association index may enable the mapping of the text metadata to the corresponding set of object-ROI sub-classified as the equipment within the non-editable schematic illustration 300. In an exemplary embodiment, the association determination module 220 may determine association information by calculating the entity metadata, the text metadata, and the entity classification information. The table 1600 may include several data attributes such as class_label, class_idx, confidence score, connected words information, and bounding box parameters (box.x, box.y, box.width, and box.height), which may be used to establish associations between equipment labels and equipment objects. In an embodiment, the association information determination module 220, in order to calculate the equipment association index, may determine the set of equipment-text ROIs from the set of text-ROIs 502 by matching the extracted equipment-list metadata with the class label information of each object-ROI. For example, in row 2, the text "WATER_COOLER" is identified with a high confidence score of 0.995, and its ROI coordinates provide location information for further processing. In an embodiment, the association information determination module 220 may further calculate the equipment association index by determining a minimum distance between each of the identified equipment-text ROIs and at least one of the set of object-ROls classified as the equipment. This calculation is performed using a Euclidean distance metric, which measures the spatial proximity of a centre point of the corresponding text-ROI to a centre point of the corresponding object-ROI classified as the equipment. If the computed distance is less than the maximum of the width or height of the object-ROI classified as the equipment, the text-ROI is associated with the object-ROI classified as the equipment, as indicated in the tag column of the table 1600, where an equipment ID such as "E-?34--010A/B" is assigned.

Referring back to **FIG. 2**, the association information determination module 220, in order to calculate the instrument association index, may determine an intersection over union between each of the set of text-ROls with at least one of the set of object-ROIs classified as the instrument based on the corresponding text location information of the set of text-ROls and the object location information corresponding to each of the set of object-ROIs classified as the instrument.

Referring now to **FIG. 17**, a table 1700 depicting association information between the set of text-ROIs 502 and the set of object-ROIs classified as the instrument, is illustrated, in accordance with an embodiment of the present disclosure. The table 1700 depicts a representation of the association information determined between the set of text-ROIs 502 and the set of object-ROIs classified as the instrument. In an exemplary embodiment, the association information determination module **220**, in order to calculate the instrument association index, may determine an intersection over union (loU) between each of the set of text-ROIs 502 and at least one of the set of object-ROls classified as the instrument. The IoU calculation is based on comparing the ROI coordinates of the detected text and the corresponding object-ROI classified as the instrument. The table 1700 may include multiple attributes such as class_label, class_idx, confidence score, connected words, bounding box coordinates (box.x, box.y, box.width, and box.height), and tag values. These attributes provide critical details regarding the detected text elements and their spatial relationships with the identified object-ROI classified as the instrument. For instance, the column words_info contains textual data extracted from the non-editable schematic illustration 300 along with their corresponding ROI coordinates (i.e., bounding box coordinate), which are used to determine proximity to the object-ROI classified as the instrument. The association process involves iterating through the set of object-ROls classified as the instrument and comparing them with the set of text-ROls 502. If a text-ROI is determined to be fully or partially inside an object-ROI classified as the instrument based on loU calculations, it is associated with the corresponding object-ROI classified as the instrument and tagged accordingly. As shown in the table 1700, the "tag" column indicates successful associations, where text such as "Ain K2903" is linked to the respective instrument component.

Referring back to **FIG. 2**, the association information determination module 220, in order to calculate the valve association index, may determine an intersection over union (IoU) between each of the set of text-ROIs with at least one of the set of object-ROls classified as the valve based on the corresponding text location information of the set of text-ROls and the object location information corresponding to each of the set of object-ROls classified as the valve.

Referring now to **FIG. 18**, a table 1800 depicting association information between the set of text-ROIs 502 and the set of object-ROls classified as the valve, is illustrated, in accordance with an embodiment of the present disclosure. The table 1800 depicts a representation of the association information determined between the set of text-ROIs 502 and the set of object-ROls classified as the valve. In an exemplary embodiment, the association information determination module 220, in order to calculate the valve association index, may determine an Intersection over Union (IoU) between each of the set of text-ROIs 502 and at least one of the set of object-ROls classified as the valve. The loU calculation is performed based on the corresponding text location information extracted from the set of text-ROls 502 and the object location information of each valve object-ROI, which includes parameters such as box.x, box.y, box.width, and box.height, as illustrated in the table 1800. The IoU metric ensures associations by evaluating the degree of overlap between the text ROI and the object-ROI classified as the valve. In an embodiment, the association process involves iterating through the detected object-ROls classified as the valve and analyzing if a text-ROI falls inside or near the object-ROI classified as the valve. If the spatial proximity meets a predefined threshold, the text-ROI is associated with the corresponding object-ROI classified as the valve and tagged accordingly in the tag column. For instance, the row containing the text "FL=Note" in the tag column has been associated with an object-ROI classified as the valve based on its spatial relationship.

Referring back to **FIG. 2**, the association information determination module 220, in order to calculate the fitting association index, may determine an intersection over union between each of the set of text-ROls with at least one of the set of object-ROls classified as the fitting based on the corresponding text location information of the set of text-ROls and the object location information corresponding to each of the set of object-ROIs classified as the fitting.

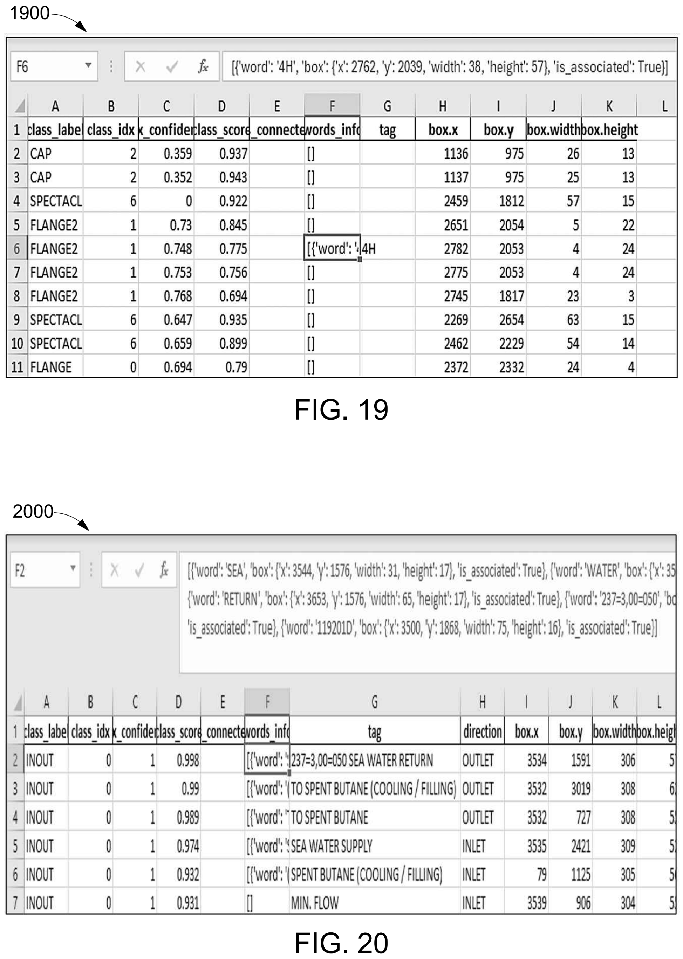

Referring now to **FIG. 19**, a table 1900 depicting association information between the set of text-ROIs 502 and the set of object-ROIs classified as the fitting, is illustrated, in accordance with an embodiment of the present disclosure. The table 1900 depicts a representation of the association information determined between the set of text-ROIs 502 and the set of object-ROIs classified as the fitting. In an exemplary embodiment, the association information determination module 220, in order to calculate the fitting association index, may determine an intersection over union (IoU) between each of the set of text-ROIs 502 and at least one of the set of object-ROIs classified as fittings. The loU calculation may be performed based on coordinates of the set of text-ROls 502 and the object-ROI classified as the fitting, including parameters such as box.x, box.y, box.width, and box.height. The association process involves iterating through the object-ROIs classified as the fitting and analyzing whether any text-ROI is contained within or in close proximity to the object-object ROI classified as the fitting. For example, the row containing the text "4H" in the words_info column has been associated with a flange fitting based on its ROI coordinates.

Referring back to **FIG. 2**, the association information determination module 220, in order to calculate the connector association index, may determine an intersection over union between each of the set of text-ROIs with at least one of the set of object-ROls classified as the connector based on the corresponding text location information of the set of text-ROls and the object location information corresponding to each of the set of object-ROIs classified as the connector.

Referring now to **FIG. 20**, a table 2000 depicting association information between the set of text-ROIs 502 and the set of object-ROIs classified as the connector, is illustrated, in accordance with an embodiment of the present disclosure. The table 2000 depicts a representation of the association information determined between the set of text-ROls 502 and the set of object-ROIs classified as the connector. In an exemplary embodiment, the association information determination module 220, in order to calculate the connector association index, may determine an Intersection over Union (IoU) between each of the set of text-ROls 502 and at least one of the set of object-ROls classified as the connector. The IoU calculation may be based on comparing the coordinates of the set of text-ROIs 502 and the object-ROIs classified as the connector, which may include parameters such as box.x, box.y, box.width, and box.height. In an embodiment, the association process for connectors may involve different classification strategies based on the connector type. If the connector is classified as RECT, UTILITY, or DRAIN, the text-ROI must be located within the object-ROI classified as the connector. If the connector is classified as INOUT, the association is determined based on the spatial proximity of the text-ROI, which should lie within a distance of twice the height of the object-ROI classified as the connector and positioned below the connector. As shown in table 2000, the "words_info" column contains text metadata extracted from the non-editable schematic illustration 1900, such as "237=3,00=050 SEA WATER RETURN" and "TO SPENT BUTANE (COOLING / FILLING)," which are associated with the corresponding INOUT connector based on their proximity and directional alignment. The direction column indicates whether the associated text represents an INLET or OUTLET, which is determined based on the positional relationship of the text data within or near the object-ROI classified as the connector.

Referring back to **FIG. 2**, the line determination module 222 may determine a set of lines based on determination of a skeletonized image of the non-editable schematic illustration, using an image processing technique. In an embodiment, the set of lines may be determined based on a determination of a set of vertical lines, a set of horizontal lines, and a set of angular lines. In an embodiment, the association information determination module 220 may also calculate a line association index. The association information determination module 220, in order to calculate the line association index, may determine a set of line-text ROIs from the set of text-ROIs based on a matching between the line-list metadata and location information of the set of lines. The association information determination module 220, in order to calculate the line association index, may further determine an intersection over union between each of the set of line-text ROIs and at least one of the set of lines based on the corresponding text location information of each of the set of lines. The extracted and classified lines may be stored in structured formats such as JSON or XML.

In an embodiment, the vertical and horizontal lines may be identified using morphological operations, such as opening with structuring elements specifically designed to detect line patterns. A horizontal kernel of size (min_length, 1) may be applied to isolate horizontal lines, while a vertical kernel of size (1, min_length) may be used to extract vertical lines. The extracted lines may then be analyzed to remove process and instrumentation diagram (P&ID) elements such as equipment, fittings, valves, and connectors to focus solely on the structural lines within the non-editable schematic illustration 300.

Further, the editable schematic determination module 224 may generate the editable schematic illustration based on the text metadata, the association information, and the set of lines in an editable file format. The editable schematic determination module 102, in order to generate the editable schematic illustration, may create the editable schematic illustration using a computer-aided design (CAD) algorithm based on the text metadata, the entity metadata, and the association information, and the set of lines.

It should be noted that all such aforementioned modules 202-224 may be represented as a single module or a combination of different modules. Further, as will be appreciated by those skilled in the art, each of the modules 202-224 may reside, in whole or in parts, on one device or multiple devices in communication with each other. In some embodiments, each of the modules 202-224 may be implemented as dedicated hardware circuit comprising custom application-specific integrated circuit (ASIC) or gate arrays, off-the-shelf semiconductors such as logic chips, transistors, or other discrete components. Each of the modules 202-224 may also be implemented in a programmable hardware device such as a field programmable gate array (FGPA), programmable array logic, programmable logic device, and so forth. Alternatively, each of the modules 202-224 may be implemented in software for execution by various types of processors (e.g. processor 104). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for generating an editable schematic illustration of a non-editable schematic illustration. For example, the exemplary system 100 and the associated computing device 102 may generate an editable schematic illustration of a non-editable schematic illustration by the processes discussed herein. In particular, as will be appreciated by those of ordinary skill in the art, control logic and/or automated routines for performing the techniques and steps described herein may be implemented by the system 100 and the associated computing device 102 either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be included in the one or more processors on the system 100.

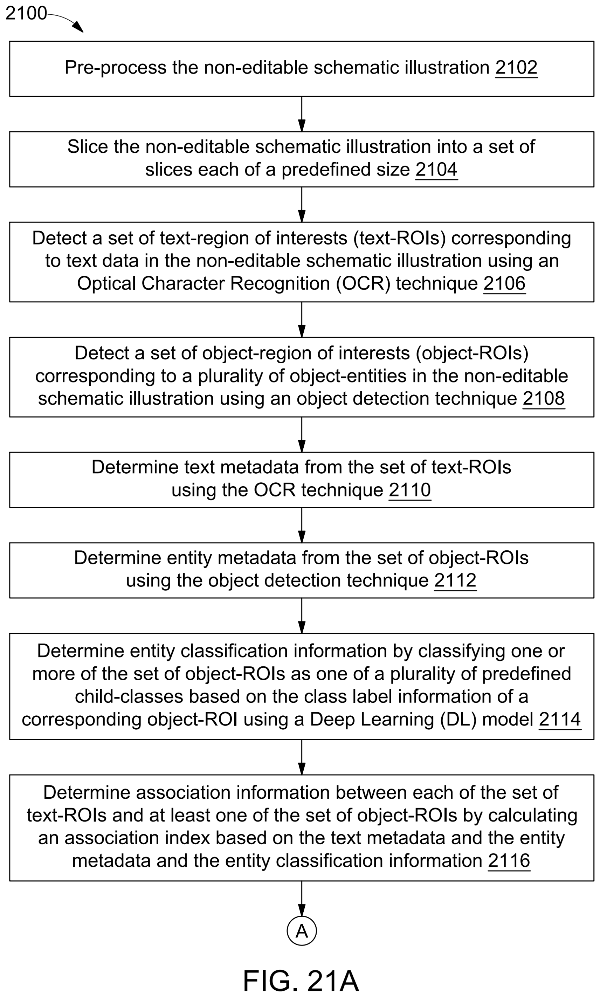

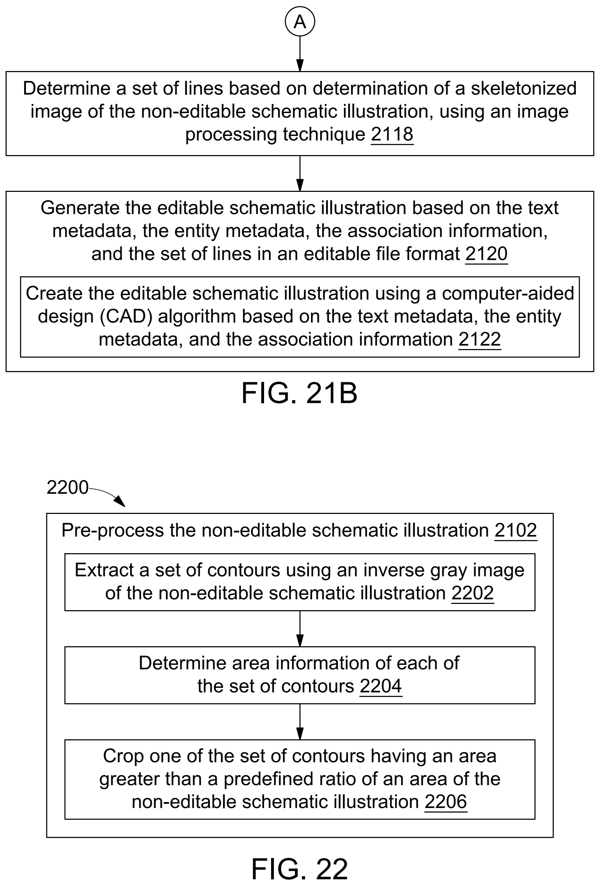

Referring now to **FIG. 21A** and **FIG. 21B**, a flow diagram 2100 of a methodology of generating an editable schematic illustration of a non-editable schematic illustration, is illustrated, in accordance with an embodiment of the present disclosure. **FIG. 21A** and **FIG. 21B** are explained in conjunction with **FIGs. 1-2****.** In an embodiment, the flow diagram 2100 may include a plurality of steps that may be performed by various modules of the computing device 102 so as to generate an editable schematic illustration of a non-editable schematic illustration. The computing device 102 may receive a non-editable schematic illustration as an input. It should be noted that the input may be indicated or provided by a user via the I/O device 108. In an embodiment, the non-editable schematic illustration may correspond to a Piping and Instrument Diagram (P&ID). In an embodiment, the non-editable schematic illustration may correspond to a Piping and Instrument Diagram (P&ID). In an embodiment, the P&ID may be a schematic illustration of a Piping and Instrument system used in industries. In an embodiment, the non-editable schematic illustration may be provided in various formats, including but not limited to, image files (e.g., PNG, JPEG), or document formats (e.g., PDF).

At step 2102, the non-editable schematic illustration may be pre-processed. Further, at step 2104, the non-editable schematic illustration may be sliced into a set of slices each of a predefined size. Further, at step 2106, a set of text-region of interests (text-ROIs) may be detected corresponding to text data in the non-editable schematic illustration using an Optical Character Recognition (OCR) technique. In an embodiment, the set of text-ROls may be detected based on detection of the text data in each of the set of slices.

Further, at step 2108, a set of object-region of interests (object-ROIs) corresponding to a plurality of object-entities in the non-editable schematic illustration using an object detection technique. In an embodiment, the set of object-ROIs may be detected based on detection of the plurality of object-entities in each of the set of slices.

Further, at step 2110, text metadata may be determined from the set of text-ROls using the OCR technique. In an embodiment, the text metadata may include text information, text orientation information and text location information associated to each of the set of text-ROIs. The text metadata may also include equipment-list metadata and line-list metadata. The equipment-list metadata may be determined by determining a set of equipment-list ROIs from the set of text-ROls having the text orientation information equal to zero degrees from a predefined portion of the non-editable schematic illustration. In an embodiment, the equipment-list metadata may be determined as text data from the set of equipment-list ROIs. Additionally, the line-list metadata may be determined based on detection of a predefined delimiter and a predefined symbol in the text metadata determined from the set of text-ROls.

Further, at step 2112, entity metadata may be determined from the set of object-ROIs using the object detection technique. In an embodiment, the entity metadata may include object orientation information, class label information, and object location information associated to each of the set of object-ROIs. The class label information may be determined based on a classification of each of the set of object-ROIs as one of a plurality of predefined classes and as one of a plurality of predefined sub-classes of each of the plurality of predefined classes using the object detection technique. In an embodiment, the plurality of predefined classes may include, but are not limited to, an instrument, a valve, a fitting, an equipment, and a connector. In an embodiment, the plurality of predefined sub-classes of the instrument may include, but are not limited to, a shared indicator, an indicator, a computer indicator, and a programmable indicator. In an embodiment, the plurality of predefined sub-classes of the valve may include, but are not limited to, a gate valve, a check valve, a glove valve, a butterfly valve, a needle valve, and a three-way valve. In an embodiment, the plurality of predefined sub-classes of the fitting may include, but are not limited to, a flange, a cap, a reducer, a hose connection, and a spectacle blind. In an embodiment, the plurality of predefined sub-classes of the equipment may include, but are not limited to, an air cooler, a water cooler, and a tube and shell exchanger. In an embodiment, the plurality of predefined sub-classes of the connector may include, but are not limited to, an inlet-outlet (IN-OUT) connector, a rectangle connector, a utility connector, and a drain connector.

Further at step 2114, entity classification information may be determined by classifying one or more of the set of object-ROls as one of the plurality of predefined child-classes based on the class label information of a corresponding object-ROls using a Deep Learning (DL) model. In order to determine the entity classification information of the set of object-ROIs sub-classified as the flow arrow, the one or more of the set of object-ROIs sub-classified as the flow arrow may be further classified as one of the plurality of predefined child-classes that may include a left flow arrow, an up flow arrow, a down flow arrow, a right flow arrow, an up-left flow arrow, a down flow arrow, and a down-left flow arrow. In order to classify, a set of arrow-ROls may be determined from the set of object-ROls sub-classified as the flow arrow. In order to classify, a direction of each of the set of arrow-ROls may be determined from a plurality of directions using a direction classification model.

In order to determine the entity classification information of the set of object-ROIs sub-classified as the rectangle connector, the one or more of the set of object-ROIs sub-classified as the rectangle connector may be further classified as one of the plurality of child-classes that may include an outlet connector and an inlet connector. In order to classify the one or more of the set of object-ROIs sub-classified as the IN-OUT connector, one or more portions of the non-editable schematic illustration may be determined using the object detection technique. Each of the one or more portions may include one or more of the set of object-ROIs sub-classified as the IN-OUT connector. In order to classify the one or more of the set of object-ROIs sub-classified as the IN-OUT connector, a width of the one or more portions of the non-editable schematic illustration may be determined.

In order to classify the one or more of the set of object-ROIs sub-classified as the IN-OUT connector, a width of each of the set of object-ROls sub-classified as the IN-OUT connector may be determined. In order to classify the one or more of the set of object-ROIs sub-classified as the IN-OUT connector, a top-left x-coordinate of each of the set of object-ROls sub-classified as the IN-OUT connector may be determined. In order to classify the one or more of the set of object-ROIs sub-classified as the IN-OUT connector, a centre point may be detected from a plurality of edge points in each of the set of object-ROIs sub-classified as the IN-OUT connector. In an embodiment, one point from the plurality of edge points may be determined as the centre point in case the one point is at an acute angle with respect to a nearest point from the plurality of edge points. Accordingly, each of the set of object-ROIs sub-classified as the IN-OUT connector may be further classified as one of the outlet connector or the inlet connector. In an embodiment, an object-ROI from the set of object-ROIs sub-classified as the IN-OUT connector may be classified as the inlet connector in case at least one of: a centre point of the object-ROI may be detected in a left of the object-ROI, else the set of object-ROIs sub-classified as the IN-OUT connector may be classified as the outlet connector and the centre point of the object-ROI may be detected in a right half of the object-ROI and a summation of the top-left x-coordinate of the object-ROI and the width of the object-ROI may be greater than and equal to about the width of the corresponding portion of the non-editable schematic illustration, else the set of object-ROls sub-classified as the IN-OUT connector may be classified as the outlet connector.

Further at step 2116, association information between each of the set of text-ROIs and at least one of the set of object-ROIs may be determined by calculating an association index based on the text metadata and the entity metadata and the entity classification information. The association index may include an equipment association index, an instrument association index, a valve association index, a fitting association index, and a connector association index. In order to calculate the equipment association index, a set of equipment-text ROIs may be determined from the set of text-ROIs based on a matching between the equipment-list metadata and the class label information of each of the set of object-ROIs. In order to calculate the equipment association index, a minimum distance between each of the set of equipment-text ROIs and at least one of the set of object-ROIs classified as the equipment based on the corresponding text location information of each of the set of equipment-text ROIs and the corresponding object location information of each of the set of object-ROls classified as the equipment.

In order to calculate the instrument association index, an intersection over union (loU) may be determined between each of the set of text-ROIs with at least one of the set of object-ROIs classified as the instrument based on the corresponding text location information of the set of text-ROIs and the object location information corresponding to each of the set of object-ROIs classified as the instrument.

In order to calculate the valve association index, an intersection over union (loU) may be determined between each of the set of text-ROIs with at least one of the set of object-ROIs classified as the valve based on the corresponding text location information of the set of text-ROIs and the object location information corresponding to each of the set of object-ROIs classified as the valve.

In order to calculate the fitting association index, an intersection over union may be determined between each of the set of text-ROls with at least one of the set of object-ROIs classified as the fitting based on the corresponding text location information of the set of text-ROIs and the object location information corresponding to each of the set of object-ROls classified as the fitting.

In order to calculate the connector association index, an intersection over union between each of the set of text-ROIs with at least one of the set of object-ROIs classified as the connector may be determined based on the corresponding text location information of the set of text-ROIs and the object location information corresponding to each of the set of object-ROls classified as the connector.

Further at step 2118, a set of lines may be determined based on determination of a skeletonized image of the non-editable schematic illustration, using an image processing technique. In an embodiment, the set of lines may be determined based on a determination of a set of vertical lines, a set of horizontal lines, and a set of angular lines. In an embodiment, a line association index may also be calculated. In order to calculate the line association index, a set of line-text ROIs may be determined from the set of text-ROIs based on a matching between the line-list metadata and location information of the set of lines. In order to calculate the line association index, an intersection over union may be determined between each of the set of line-text ROIs and at least one of the set of lines based on the corresponding text location information of each of the set of line-text ROIs and the corresponding location information of each of the set of lines.

Further at step 2120, an editable schematic illustration may be generated based on the text metadata, the entity metadata, the association information, and the set of lines in an editable file format. In order to generate the editable schematic illustration, at step 2122, the editable schematic illustration may be created using a computer-aided design (CAD) algorithm based on the text metadata, the entity metadata, the association information, and the set of lines.

Referring now to **FIG. 22**, a flow diagram of a methodology of pre-processing the non-editable schematic illustration 300, is illustrated, in accordance with an embodiment of the present disclosure. **FIG. 22** is explained in conjunction with **FIGs. 1-2****.** In an embodiment, the flow diagram may include a plurality of steps that may be performed by various modules of the computing device 102 so as to pre-process the non-editable schematic illustration 300.

At step 2202, a set of contours may be extracted using an inverse gray image of the non-editable schematic illustration 300. In order to pre-process the non-editable schematic illustration 300, at step 2204, area information of each of the set of contours may be determined. Further, in order to pre-process the non-editable schematic illustration 300, at step 2206, one of the set of contours having an area greater than a predefined ratio of an area of the non-editable schematic illustration 300 may be cropped.

Thus, the disclosed method 2100 and system 100 overcome the challenges associated with the manual interpretation and modification of non-editable schematic illustrations, such as Piping and Instrumentation Diagrams (P&IDs), process flow diagrams, and other industrial schematics. Conventional methods often require manual efforts to extract and analyse critical information, which leads to inefficiency, errors, and inconsistencies in documentation and design processes. The disclosed method 2100 and system 100 address these challenges by providing an automated framework that utilizes image processing techniques, machine learning algorithms, and computer-aided design (CAD) tools to convert non-editable schematic illustrations into editable digital representations.

As will be appreciated by those skilled in the art, the techniques described in the various embodiments discussed above are not routine, or conventional, or well-understood in the art. The techniques discussed above provide for generating editable schematic illustration of non-editable schematic illustration.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps bring an improvement in the functioning of the device itself as the claimed steps provide a technical solution to a technical problem.

The specification has described the method and system for generating editable schematic illustration of non-editable schematic illustration. The illustrated steps are set out to explain the exemplary embodiments shown, and it should be anticipated that ongoing technological development will change the manner in which particular functions are performed. These examples are presented herein for the purpose of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

It is intended that the disclosure and examples be considered as exemplary only, with a true scope of disclosed embodiments being indicated by the following claims.

## Claims

1. A method (2100) for generating an editable schematic illustration of a non-editable schematic illustration (300), the method (2100) comprising:
detecting (2106), by a processor (104), a set of text-region of interests (text-ROIs) (502) corresponding to text data in the non-editable schematic illustration (300) using an Optical Character Recognition (OCR) technique;
detecting (2108), by the processor (104), a set of object-region of interests (object-ROls) corresponding to a plurality of object-entities in the non-editable schematic illustration (300) using an object detection technique;
determining (2110), by the processor (104), text metadata from the set of text-ROls (502) using the OCR technique, wherein the text metadata comprises text information, text orientation information and text location information associated to each of the set of text-ROIs (502);
determining (2112), by the processor (104), entity metadata from the set of object-ROIs using the object detection technique, wherein the entity metadata comprises object orientation information, class label information, and object location information associated to each of the set of object-ROls;
determining (2114), by the processor (104), entity classification information by classifying one or more of the set of object-ROIs as one of a plurality of predefined child-classes based on the class label information of a corresponding object-ROI using a Deep Learning (DL) model;
determining (2116), by the processor (104), association information between each of the set of text-ROIs (502) and at least one of the set of object-ROIs by calculating an association index based on the text metadata, the entity metadata, and the entity classification information;
determining (2118), by the processor (104), a set of lines based on determination of a skeletonized image of the non-editable schematic illustration (300), using an image processing technique, wherein the set of lines are determined based on a determination of a set of vertical lines, a set of horizontal lines, and a set of angular lines; and
generating (2120), by the processor (104), the editable schematic illustration based on the text metadata, the entity metadata, the association information, and the set of lines in an editable file format.

2. The method (2100) as claimed in claim 1, comprising:
slicing (2104), by the processor (104), the non-editable schematic illustration (300) into a set of slices each of a predefined size,
wherein the set of text-ROIs (502) are detected based on detection of the text data in each of the set of slices, and
wherein the set of object-ROIs are detected based on detection of the plurality of object-entities in each of the set of slices.

3. The method (2100) as claimed in claim 1, comprising:
pre-processing (2102), by the processor (104), the non-editable schematic illustration (300) by:
extracting (2202), by the processor (104), a set of contours using an inverse gray image of the non-editable schematic illustration (300);
determining (2204), by the processor (104), area information of each of the set of contours; and
cropping (2206), by the processor (104), one of the set of contours having an area greater than a predefined ratio of an area of the non-editable schematic illustration (300).

4. The method (2100) as claimed in claim 1, wherein the text metadata comprises equipment-list metadata and line-list metadata,
wherein determining the equipment-list metadata comprises:
determining, by the processor (104), a set of equipment-list ROIs (504) from the set of text-ROls (502) having the text orientation information equal to zero degrees from a predefined portion of the non-editable schematic illustration (300),
wherein the equipment-list metadata is determined as text data from the set of equipment-list ROIs (504); and
wherein the line-list metadata is determined based on detection of a predefined delimiter and a predefined symbol in the text metadata determined from the set of text-ROIs (502).

5. The method (2100) as claimed in claim 4, wherein the class label information of each of the set of object-ROls is determined based on a classification of each of the set of object-ROIs as one of a plurality of predefined classes and as one of a plurality of predefined sub-classes of each of the plurality of predefined classes using the object detection technique.

6. The method (2100) as claimed in claim 5, wherein the non-editable schematic illustration (300) and the editable schematic illustration correspond to a Piping and Instrument Diagram (P&ID),
wherein the plurality of predefined classes comprises a line, an instrument, a valve, a fitting, an equipment, and a connector,
wherein the plurality of predefined sub-classes of the line comprises an O-sign line, a double slash sign line, a dotted line, and a flow arrow,
wherein the plurality of predefined sub-classes of the instrument comprises a shared indicator, an indicator, a computer indicator, and a programmable indicator,
wherein the plurality of predefined sub-classes of the valve comprises a gate valve, a check valve, a globe valve, a butterfly valve, a needle valve, and a three-way valve,
wherein the plurality of predefined sub-classes of the fitting comprises a flange, a cap, a reducer, a hose connection, and a spectacle blind,
wherein the plurality of predefined sub-classes of the equipment comprises an air cooler, a water cooler, and a tube and shell exchanger, and
wherein the plurality of predefined sub-classes of the connector comprises an inlet-outlet (IN-OUT) connector, a rectangle connector, a utility connector, and a drain connector.

7. The method (2100) as claimed in claim 6, comprising:
classifying the one or more of the set of object-ROIs sub-classified as the flow arrow as one of the plurality of predefined child-classes comprising a left flow arrow, an up flow arrow, a down flow arrow, a right flow arrow, an up-left flow arrow, an up-right-flow arrow, a down-right flow arrow, a down-left flow arrow, wherein the classification comprises:
determining, by the processor (104), a set of arrow-ROls from the set of object-ROls sub-classified as the flow arrow; and
determining, by the processor (104), a direction of each of the set of arrow-ROIs from a plurality of directions using a direction classification model.

8. The method (2100) as claimed in claim 6, comprising:
classifying the one or more of the set of object-ROIs sub-classified as the rectangle connector as one of the plurality of predefined child-classes comprising an outlet connector and an inlet connector, wherein the classification comprises:
classifying, by the processor, the set of object-ROIs sub-classified as the rectangle connector as one of: the outlet connector or the inlet connector based on detection of a set of predefined keywords in the text metadata associated to the one or more of the set of object-ROIs.

9. The method (2100) as claimed in claim 6, comprising:
classifying the one or more of the set of object-ROIs (1302) sub-classified as the IN-OUT connector as one of the plurality of predefined child-classes comprising an inlet connector (1502) and an outlet connector (1504), wherein the classification comprises:
determining, by the processor (104), one or more portions 1300 of the non-editable schematic illustration 300, each comprising one or more of the set of object-ROIs sub-classified as the IN-OUT connector using the object detection technique;
determining, by the processor (104), a width of the one or more portions 1300 of the non-editable schematic illustration 300;
determining, by the processor (104), a width of each of the set of object-ROls (1302) sub-classified as the IN-OUT connector;
determining, by the processor (104), a top-left x-coordinate of each of the set of object-ROIs (1302) sub-classified as the IN-OUT connector;
detecting, by the processor (104), a centre point (1402) from a plurality of edge points in each of the set of object-ROIs (1302) sub-classified as the IN-OUT connector,
wherein one point from the plurality of edge points is determined as the centre point (1402) in case the one point is at an acute angle with respect to a nearest point from the plurality of edge points;
classifying, by the processor (104), each of the set of object-ROls (1302) sub-classified as the INOUT connector as one of: the outlet connector (1504) or the inlet connector (1502),
wherein an object-ROI from the set of object-ROIs (1302) sub-classified as the IN-OUT connector is classified as the inlet connector (1502) in case at least one of:
a centre point of the object-ROI is detected in a left half of the object-ROI, and
the centre point of the object-ROI is detected in a right half of the object-ROI and a summation of the top-left x-coordinate of the object-ROI and the width of the object-ROI is greater than and equal to about the width of the corresponding portion of the non-editable schematic illustration (300).

10. The method (2100) as claimed in claim 6, wherein the association index comprises an equipment association index, an instrument association index, a valve association index, a fitting association index, and a connector association index,
wherein calculation of the equipment association index comprises:
determining, by the processor (104), a set of equipment-text ROIs from the set of text-ROIs (502) based on a matching between the equipment-list metadata and the class label information of each of the set of object-ROIs; and
determining, by the processor (104), a minimum distance between each of the set of equipment-text ROIs and at least one of the set of object-ROIs classified as the equipment based on the corresponding text location information of each of the set of equipment-text ROIs and the corresponding object location information of each of the set of object-ROIs classified as the equipment,
wherein calculation of the instrument association index comprises:
determining, by the processor (104), an intersection over union between each of the set of text-ROls (502) with at least one of the set of object-ROIs classified as the instrument based on the corresponding text location information of the set of text-ROIs (502) and the object location information corresponding to each of the set of object-ROIs classified as the instrument,
wherein calculation of the valve association index comprises:
determining, by the processor (104), an intersection over union between each of the set of text-ROls (502) with at least one of the set of object-ROIs classified as the valve based on the corresponding text location information of the set of text-ROIs (502) and the object location information corresponding to each of the set of object-ROIs classified as the valve,
wherein calculation of the fitting association index comprises:
determining, by the processor (104), an intersection over union between each of the set of text-ROls (502) with at least one of the set of object-ROIs classified as the fitting based on the corresponding text location information of the set of text-ROIs (502) and the object location information corresponding to each of the set of object-ROIs classified as the fitting, and
wherein calculation of the connector association index comprises:
determining, by the processor (104), an intersection over union between each of the set of text-ROls (502) with at least one of the set of object-ROIs classified as the connector based on the corresponding text location information of the set of text-ROIs (502) and the object location information corresponding to each of the set of object-ROIs classified as the connector.

11. The method (2100) as claimed in claim 10, wherein the generation of the editable schematic illustration comprises:
creating (2122), by the processor (104), the editable schematic illustration using a computer-aided design (CAD) algorithm based on the text metadata, the entity metadata, and the association information.

12. A system (100) for generating an editable schematic illustration of a non-editable schematic illustration (300), comprising:
a processor (104); and
a memory (106) communicatively coupled to the processor (104), wherein the memory (106) stores processor-executable instructions, which, on execution, cause the processor (104) to:
detect a set of text-region of interests (text-ROIs) (502) corresponding to text data in the non-editable schematic illustration (300) using an Optical Character Recognition (OCR) technique;
detect a set of object-region of interests (object-ROIs) corresponding to a plurality of object-entities in the non-editable schematic illustration (300) using an object detection technique;
determine text metadata from the set of text-ROIs (502) using the OCR technique, wherein the text metadata comprises text information, text orientation information and text location information associated to each of the set of text-ROIs (502);
determine entity metadata from the set of object-ROIs using the object detection technique, wherein the entity metadata comprises object orientation information, class label information, and object location information associated to each of the set of object-ROls;
determine entity classification information by classifying one or more of the set of object-ROls as one of a plurality of predefined child-classes based on the class label information of a corresponding object-ROI using a Deep Learning (DL) model;
determine association information between each of the set of text-ROls (502) and at least one of the set of object-ROls by calculating an association index based on the text metadata and the entity metadata and the entity classification information;
determine a set of lines based on determination of a skeletonized image of the non-editable schematic illustration (300), using an image processing technique, wherein the set of lines are determined based on a determination of a set of vertical lines, a set of horizontal lines, and a set of angular lines; and
generate the editable schematic illustration based on the text metadata, the entity metadata, the association information, and the set of lines in an editable file format.
